# EUROPEAN PATENT APPLICATION

(11) **EP 2 755 306 A2**
(43) Date of publication of application: **16.07.2014**
(21) Application number: 14151048.7
(22) Date of filing: 14.01.2014
(51) Int. Cl.: H02K 11/00

(54) **Rotation detector of a motor unit**

(30) Priority: 15.01.2013 JP 2013004586
(71) Applicant: Kabushiki Kaisha Yaskawa Denki, Kitakyushu-shi, Fukuoka 806-0004 (JP)
(72) Inventor: Yoshidomi, Shiro, Kitakyushu-shi, Fukuoka 806-0004 (JP); Murokita, Ikuma, Kitakyushu-shi, Fukuoka 806-0004 (JP); Yoshida, Yasushi, Kitakyushu-shi, Fukuoka 806-0004 (JP); Muraoka, Jiro, Kitakyushu-shi, Fukuoka 806-0004 (JP); OYAMA, Shoji, Tokyo, Tokyo 141-8587 (JP)
(74) Representative: Grünecker, Kinkeldey, Stockmair & Schwanhäusser

(57) **Abstract**

A rotation detector (1) of a motor unit (210) according to an embodiment includes a first support and a second support (11, 12), a pair of magnetic field forming units (21, 22, 23, 24), at least one magnetic field detector (31, 32, 33), and a first magnetic member and a second magnetic member (41, 42, 43, 44, 45, 46). The first magnetic member and the second magnetic member (41, 42, 43, 44, 45, 46) are each made of a magnetic material, cover longitudinal-direction both ends of the magnetic field detector (31, 32, 33) facing the first support (11), respectively, and face each other with a gap (S1) interposed therebetween at a longitudinal-direction mid-portion of the magnetic field detector (31, 32, 33) in the longitudinal direction. A dimension (D1) of each of the magnetic field forming units (21, 22, 23, 24) in a tangential direction of a circumference (R) is larger than a dimension (D4) of the corresponding magnetic field forming unit (21, 22, 23, 24) in a radial direction and is larger than the distance of the gap (S1).

## Description

### FIELD

The embodiments discussed herein are directed to a motor unit.

### BACKGROUND

Widely known is a motor unit equipped with a rotation detector that generates pulse signals based on rotation of a shaft thereof using magnetism.

Conventionally, there has been developed a rotation detector formed of at least two magnetic elements that can cause a large Barkhausen jump, a coil wound around each magnetic element, and a pair of permanent magnets arranged with the magnetic elements interposed therebetween and having the magnetic pole directions opposite to each other. The rotation detector detects rotation of a gear made of a magnetic material and including a plurality of teeth (refer to Japanese Patent Application Laid-open No. 2002-033645, for example).

Because the pair of permanent magnets is arranged such that the gap therebetween is smaller than the gap between the teeth of the gear in the rotation detector, one tooth faces either one of the pair of permanent magnets. The rotation detector changes a magnetic field applied to the magnetic elements in response to repetitive movement of each tooth closer to and away from each permanent magnet. Thus, the rotation detector causes a large Barkhausen jump, thereby generating pulse signals from the coil.

In the conventional rotation detector, however, reduction in cogging torque is not taken into account. Cogging torque is force acting on an area between a magnetic material (corresponding to the teeth of the gear) and a permanent magnet. Cogging torque is torque pulsations (fluctuations) caused by a change in magnetic attractive force with respect to a relative position (a rotation angle) of the magnetic material and the permanent magnet. The description below refers to a phenomenon including fluctuations in the rotational velocity of a detection target, such as a shaft, caused by cogging torque as cogging.

Specifically, when rotation of the gear moves a certain tooth closer to one permanent magnet, a part of the magnetic flux of the permanent magnet extends toward the tooth. Further rotation moves the tooth to a position at which the tooth faces the permanent magnet. Because the magnetic resistance between the tooth and the permanent magnet is minimized at the position, the tooth (gear) comes to rest at the position. To rotate the tooth (gear) from the position, torque high enough to overcome the magnetic attractive force is required (generation of cogging torque).

The generation of cogging torque causes fluctuations in the rotational velocity of the gear (occurrence of cogging). The cogging torque travels through the rotor shaft of the gear, thereby causing vibrations and noise. Furthermore, the cogging torque acts like static torque, thereby increasing starting torque of the gear. As a result, a motor unit equipped with such a rotation detector fails to detect rotation of a shaft accurately with the rotation detector.

In view of the problems described above, it is an object of the present invention to provide a motor unit that enables a rotation detector to suppress cogging, thereby detecting rotation of a shaft accurately.

### SUMMARY

A motor unit according to an aspect of an embodiment includes a motor that rotates a shaft about an axial line and a rotation detector that detects rotation of the shaft. The rotation detector includes a first support and a second support, a pair of magnetic field forming units, at least one magnetic field detector, and a first magnetic member and a second magnetic member. The first support and the second support are provided in a manner separated from each other in a direction of the axial line, and one of them is rotated along with rotation of the shaft using the axial line as a rotational axis. The pair of magnetic field forming units is provided on the first support in a manner facing the second support at different positions along a circumference about the axial line and has different polarities. The magnetic field detector is formed by winding a coil around a magnetic element whose magnetization direction changes in a longitudinal direction and is provided on the second support such that a longitudinal-direction side of the magnetic element faces the first support. The first magnetic member and the second magnetic member are each made of a magnetic material, cover longitudinal-direction both ends of the magnetic field detector facing the first support, respectively, and face each other with a gap interposed therebetween at a longitudinal-direction mid-portion of the magnetic field detector. The dimension of each of the magnetic field forming units in a tangential direction of the circumference is larger than the dimension of the corresponding magnetic field forming unit in a radial direction and is larger than the distance of the gap.

The pair of magnetic field forming units is arranged in a manner facing an overlapping point serving as an intersection point at which longitudinal-direction both ends of the magnetic element overlap with the circumference. The dimension of each of the magnetic field forming units in the tangential direction of the circumference is equal to or larger than a length twice as long as a distance from center of the corresponding magnetic field forming unit in the tangential direction of the circumference to a position corresponding to one end of the first magnetic member in a circumferential direction when the center of the corresponding magnetic field forming unit coincides with the overlapping point at one end of the magnetic field detector in the longitudinal direction and equal to or smaller than the length of a chord subtending an arc corresponding to one-half of the whole circumference of the first support.

Each of the magnetic field forming units is formed such that the dimension thereof in the radial direction is smaller at both ends in the tangential direction of the circumference than at the center thereof.

Each of the magnetic field forming units is formed such that a clearance between the corresponding magnetic field forming units and the second support is larger at both ends in the tangential direction of the circumference than at the center thereof.

Each of the magnetic field forming units is bonded magnets and formed so as to have lower magnetic force at both ends in the tangential direction of the circumference than at the center thereof.

The first support is provided with at least two pairs of the magnetic field forming units arranged in a manner surrounding the whole circumference of the axial line at regular intervals such that the polarities thereof alternate in the circumferential direction. The second support is provided with at least three of the magnetic field detectors arranged in a manner surrounding the whole circumference of the axial line at regular intervals in the circumferential direction. Each of the magnetic field detectors is provided with the first magnetic member and the second magnetic member. Each of pairs of the first magnetic members and of the respective second magnetic members arranged adjacent to each other in the circumferential direction among first magnetic members and second magnetic members are positioned close to each other, forming a continuous arrangement of the first magnetic members and the second magnetic members, and the continuous arrangement covers an outer circumferential side of a portion of the second support facing the first support over nearly the whole circumference with the magnetic field detector interposed between the continuous arrangement and the second support.

The motor unit includes a storage unit and a rotation number detector. The storage unit stores therein a detection result of the magnetic field detector. The rotation number detector detects number of rotations of the shaft based on information stored in the storage unit.

The storage unit is arranged near the magnetic field detector.

The motor unit includes a rotational position detection sensor. The rotational position detection sensor optically detects a rotational position of the shaft. The rotational position detection sensor includes a reflective pattern and an optical sensor. The reflective pattern is formed on the first support or the second support that rotates along with the shaft. The optical sensor irradiates the reflective pattern with light and receives light reflected by the reflective pattern.

The reflective pattern is formed on a surface of the first support opposite to a surface on which the pair of magnetic field forming units is arranged or a surface of the second support opposite to a surface on which the magnetic field detector is arranged.

The first support is arranged at a position closer to the motor than the second support and rotates along with rotation of the shaft. The reflective pattern is formed on a surface of the first support facing the motor.

An aspect of the embodiments enables a rotation detector provided to a motor unit to suppress cogging, thereby detecting rotation of a shaft accurately.

### BRIEF DESCRIPTION OF DRAWINGS

The present invention and advantageous effects associated therewith can be readily appreciated in description of embodiments below with reference to the accompanying drawings
FIG. 1 is a view for explaining a motor system including a motor unit according to an embodiment.
FIG. 2 is a view for explaining the motor unit according to the embodiment.
FIG. 3 is a view for explaining a rotation detector in the motor unit according to the embodiment.
FIG. 4 is a view for explaining a first support and magnets of the rotation detector in the motor unit according to the embodiment viewed from the direction of the arrow IV-IV in FIG. 3.
FIG. 5 is a view for explaining a second support, magnetic field detectors, and magnetic members of the rotation detector in the motor unit according to the embodiment viewed from the direction of the arrow V-V in FIG. 3.
FIG. 6 is a view for explaining a state where the magnetic members are removed from the structure illustrated in FIG. 5.
FIG. 7 is an enlarged view for explaining a part of the second support, the magnetic field detector, and other components illustrated in FIG. 5.
FIG. 8 is a view for explaining an operation of the rotation detector in the motor unit according to the embodiment.
FIG. 9 is a view for explaining paths of a magnetic field in the rotation detector of the motor unit according to the embodiment.
FIG. 10 is a view for explaining an operation of the rotation detector in the motor unit according to the embodiment.
FIG. 11 is a view for explaining paths of the magnetic field in the rotation detector of the motor unit according to the embodiment.
FIG. 12 is a view for explaining an operation of the rotation detector in the motor unit according to the embodiment.
FIG. 13 is a view for explaining a magnetic field traveling through the magnetic members and other components in the rotation detector of the motor unit according to the embodiment.
FIG. 14 is a view for explaining a state where a magnet faces a magnetic member in the rotation detector of the motor unit according to the embodiment.
FIG. 15 is a view for explaining a state where the magnet starts to face a gap in the rotation detector of the motor unit according to the embodiment.
FIG. 16 is a view for explaining a state where the magnet covers the gap in the rotation detector of the motor unit according to the embodiment.
FIG. 17 is a view for explaining a state where one end of the magnet faces the gap in the rotation detector of the motor unit according to the embodiment.
FIG. 18 is a view for explaining a modification of the first support and the magnets in the rotation detector of the motor unit according to the embodiment.
FIG. 19 is a view for explaining another modification of the first support and the magnets in the rotation detector of the motor unit according to the embodiment.
FIG. 20 is a view for explaining a configuration relating to signal processing for detecting a rotation amount of a motor in the rotation detector of the motor unit according to the embodiment.
FIG. 21 is a view for explaining the first support and a reflective disk in the rotation detector of the motor unit according to the embodiment.
FIG. 22 is a view for explaining a modification obtained by removing side plates of the magnetic members in the rotation detector of the motor unit according to the embodiment.
FIG. 23 is a view for explaining a rotation detector of a motor unit according to another embodiment.
FIG. 24 is a view for explaining a modification of a first support and magnets in the rotation detector of the motor unit according to further another embodiment.
FIG. 25 is a view for explaining a modification of the magnetic members in the rotation detector of the motor unit according to the embodiment.
FIG. 26 is a view for explaining another modification of the magnetic members in the rotation detector of the motor unit according to the embodiment.
FIG. 27 is a view for explaining still another modification of the magnetic members in the rotation detector of the motor unit according to the embodiment.
FIG. 28 is a view for explaining still another modification of the magnetic members in the rotation detector of the motor unit according to the embodiment.
FIG. 29 is a view for explaining an example of the planar shape of the magnets in the rotation detector of the motor unit according to a first modification of the embodiment.
FIG. 30 is a view for explaining another example of the planar shape of the magnets in the rotation detector of the motor unit according to the first modification of the embodiment.
FIG. 31 is a view for explaining still another example of the planar shape of the magnets in the rotation detector of the motor unit according to the first modification of the embodiment.
FIG. 32 is a view for explaining still another example of the planar shape of the magnets in the rotation detector of the motor unit according to the first modification of the embodiment.
FIG. 33 is a view for explaining still another example of the planar shape of the magnets in the rotation detector of the motor unit according to the first modification of the embodiment.
FIG. 34 is a view for explaining still another example of the planar shape of the magnets in the rotation detector of the motor unit according to the first modification of the embodiment.
FIG. 35 is a view for explaining a state where the other end of a magnet starts to face the gap in the rotation detector of the motor unit according to the first modification of the embodiment.
FIG. 36 is a view for explaining a state where the other end of a magnet starts to face the gap in the rotation detector of the motor unit according to a second modification of the embodiment.

### DESCRIPTION OF EMBODIMENTS

### Motor System and Motor Unit

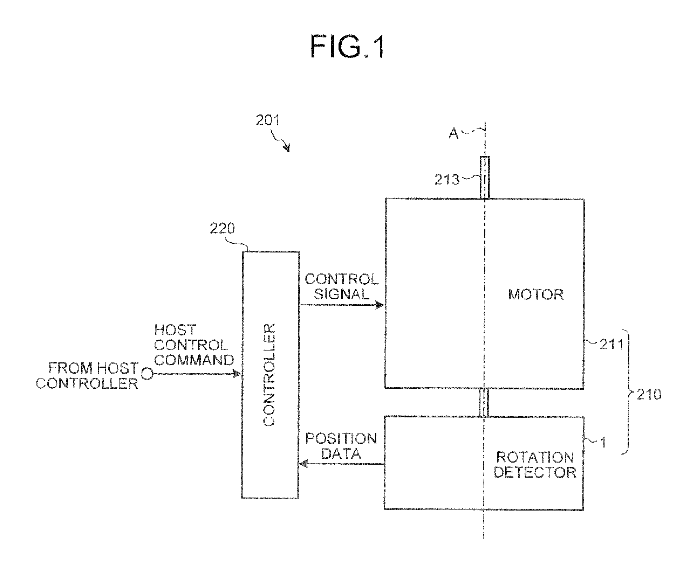

FIG. 1 illustrates a motor system including a motor unit according to an embodiment. In FIG. 1, a motor system 201 includes a motor unit 210 according to the embodiment and a controller 220. The motor unit 210 includes a motor 211 and a rotation detector 1.

The motor 211 includes a shaft 213. The motor 211 uses a direction of the axial line A as a rotational axis to rotate the shaft 213 about the rotational axis, thereby outputting rotational force. While the motor 211 is an electric motor that uses electricity as a power source in the present embodiment, the motor is not limited thereto. Alternatively, the motor may be a motor that uses another power source, such as a hydraulic motor, an air motor, and a steam motor.

The rotation detector 1 is arranged on a side opposite to the side of a loading device to which the rotational force of the motor 211 is output and is connected to the shaft 213. The rotation detector 1 detects the rotational position (rotational angle) and the number of rotations of the shaft 213, thereby detecting a rotation amount x of the motor 211. The rotation detector 1 then outputs position data indicating the rotation amount x. The rotation detector 1 may detect at least one of rotational velocity v of the motor 211 and rotational acceleration a of the motor 211 besides the rotation amount x of the motor 211. In the present embodiment, the rotation detector 1 detects only the rotation amount x, for example.

The controller 220 acquires a host control command from a host controller, which is not illustrated, and controls the motor 211 in accordance with the host control command. The controller 220 acquires position data output from the rotation detector 1. Based on the position data, the controller 220 controls rotation of the motor 211 such that the motor 211 rotates in accordance with the host control command. In the present embodiment that uses an electric motor as the motor 211, the controller 220 controls an electric current, a voltage, or the like applied to the motor 211 as a control signal based on the position data, thereby controlling rotation of the motor 211. In the case where the motor 211 uses another power source, such as oil pressure, air, and steam, the controller 220 controls supply of the power source, thereby controlling rotation of the motor 211.

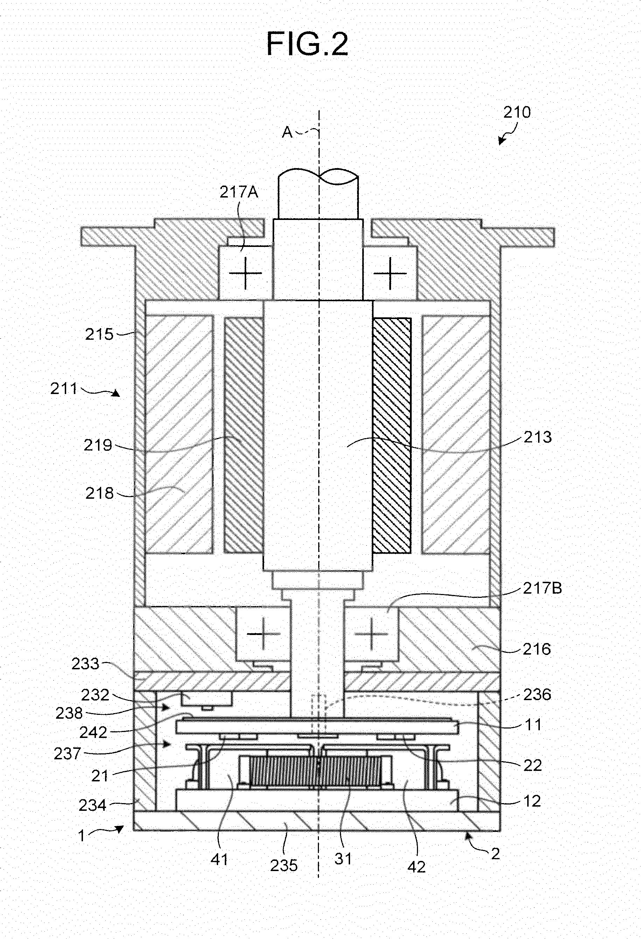

FIG. 2 illustrates the structure of the motor unit 210. As illustrated in FIG. 2, the motor unit 210 includes the motor 211 and the rotation detector 1. The rotation detector 1 is attached to the side opposite to the loading side of the motor 211. The motor 211 includes the shaft 213, a frame 215, a bracket 216, bearings 217A and 217B, a stator 218, and a rotor 219.

The frame 215 is formed in a cylindrical shape, and the outer periphery of the stator 218 is fixed to the inner peripheral surface of the frame 215. The frame 215 holds the bearing 217A at one end. The bracket 216 is formed in an approximately disk shape, and the outer peripheral portion thereof is attached to the other end of the frame 215. The bracket 216 holds the bearing 217B in the inner peripheral portion. The bearings 217A and 217B hold the shaft 213 in a rotatable manner about the direction of the axial line A.

The stator 218 includes a stator core and a stator winding and is fixed to the frame 215. The rotor 219 is arranged on the inner peripheral side of the stator 218 in a manner facing the stator 218 with a gap interposed therebetween. Applying an electric current to the stator winding of the stator 218 generates a rotating magnetic field inside the stator 218. The rotor 219 includes a rotor core and a plurality of permanent magnets. The rotor 219 is rotated by the interaction between the rotating magnetic field generated inside the stator 218 and the magnetic field generated by the permanent magnets of the rotor 219. Along with the rotation of the rotor 219, the shaft 213 rotates about the axial line A.

### Rotation Detector

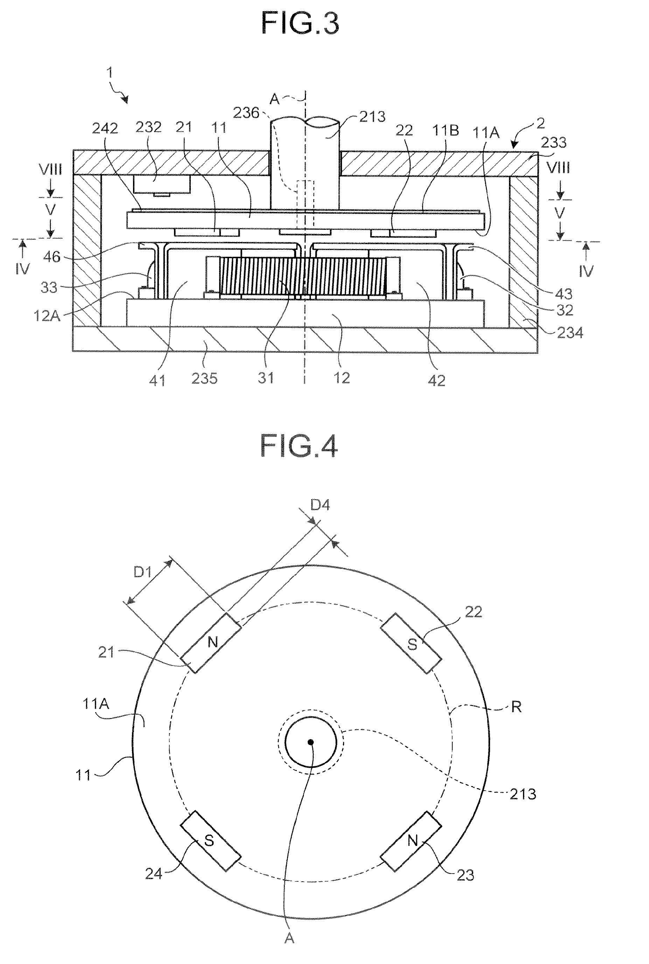

FIG. 3 illustrates the rotation detector 1. In FIG. 3, the rotation detector 1 can detect the rotational state, such as the number of rotations and the direction of rotation, of the shaft 213.

A housing 2 of the rotation detector 1 includes a base 233, a back yoke 234, and a cover member 235. The base 233 has an opening through which the shaft 213 passes at the center thereof and is attached to the bracket 216 on the loading side. The back yoke 234 is a cylindrical member made of a magnetic material, such as a metal. One end of the back yoke 234 is attached to the outer peripheral portion of the base 233 on the side opposite to the loading side. The back yoke 234 improves the magnetic noise resistance of the rotation detector 1, thereby suppressing a malfunction of the rotation detector 1 caused by leakage flux from the motor 211, for example. The cover member 235 is attached to the other end of the back yoke 234.

The housing 2, that is, the space formed by the base 233, the back yoke 234, and the cover member 235 accommodates a first support 11 and a second support 12. The housing 2 is formed in a covered cylindrical shape, and the first support 11 and the second support 12 are each formed in a disk shape, for example. In the housing 2, the first support 11 and the second support 12 are positioned such that the axial line A passes through the centers thereof, and are arranged in a manner separated from each other in the direction of the rotational axis. A surface 11A of the first support 11 is perpendicular to the axial line A and faces the second support 12. A surface 12A of the second support 12 is perpendicular to the axial line A and faces the first support 11. The first support 11 can rotate using the axial line A as the rotational axis. By contrast, the second support 12 is fixed to the housing 2. The shaft 213 is inserted into the housing 2 through the opening of the base 233. The end of the shaft 213 is fixed to the first support 11 with a bolt 236 in the housing 2, for example. When the shaft 213 rotates, the first support 11 rotates in the housing 2 along with the rotation. The first support 11 is an example of a unit that rotates a magnetic field formed by a magnetic field forming unit using the axial line A as the rotational axis with respect to a unit that detects a magnetic field, which will be described later, and a unit that forms a magnetic path, which will be described later.

FIG. 4 is a schematic of the first support 11 of the rotation detector 1 and four magnets provided on the first support 11 viewed from the direction of the arrow IV-IV in FIG. 3. As illustrated in FIG. 4, the first support 11 is provided with magnets 21, 22, 23, and 24 serving as four magnetic field forming units. The magnets 21, 22, 23, and 24 are permanent magnets sintered in a rectangular plate shape, for example, and form a magnetic field in an area between the first support 11 and the second support 12. The magnets 21, 22, 23, and 24 are separated from one another in the circumferential direction around the axial line A on the surface 11A of the first support 11 and fixed at regular intervals in the circumferential direction, for example. In the present embodiment, the magnets 21, 22, 23, and 24 are arranged at every central angle of 90 degrees with respect to the axial line A. The magnets 21, 22, 23, and 24 are arranged such that the polarities thereof alternate in the circumferential direction. The magnets 21, 22, 23, and 24 are arranged so as to have the polarities of the N-pole, the S-pole, the N-pole, and the S-pole, respectively, on the side facing the second support 12, for example. The two-dot chain line in FIG. 4 indicates a circumference R overlapping with the four magnets 21, 22, 23, and 24 around a point on the axial line A. When the first support 11 rotates, the trajectory of rotation of the magnets 21, 22, 23, and 24 coincides with the circumference R.

As illustrated in FIG. 4, a dimension D1 of the magnet 21 in a direction of a tangent at a point on the circumference R coincident with the center of the magnet 21 (hereinafter, simply referred to as a "tangential direction") is set to a predetermined value. Similarly, the dimensions of the magnets 22, 23, and 24 in the tangential direction are set equal to the dimension D1 of the magnet 21. The dimensions of the magnets 21 to 24 will be described later in detail.

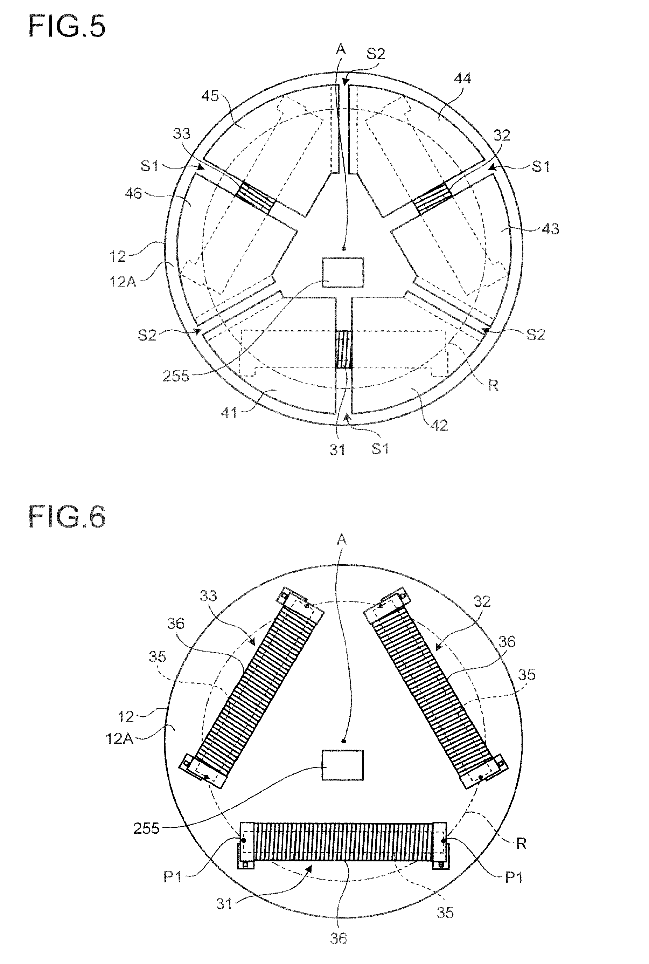

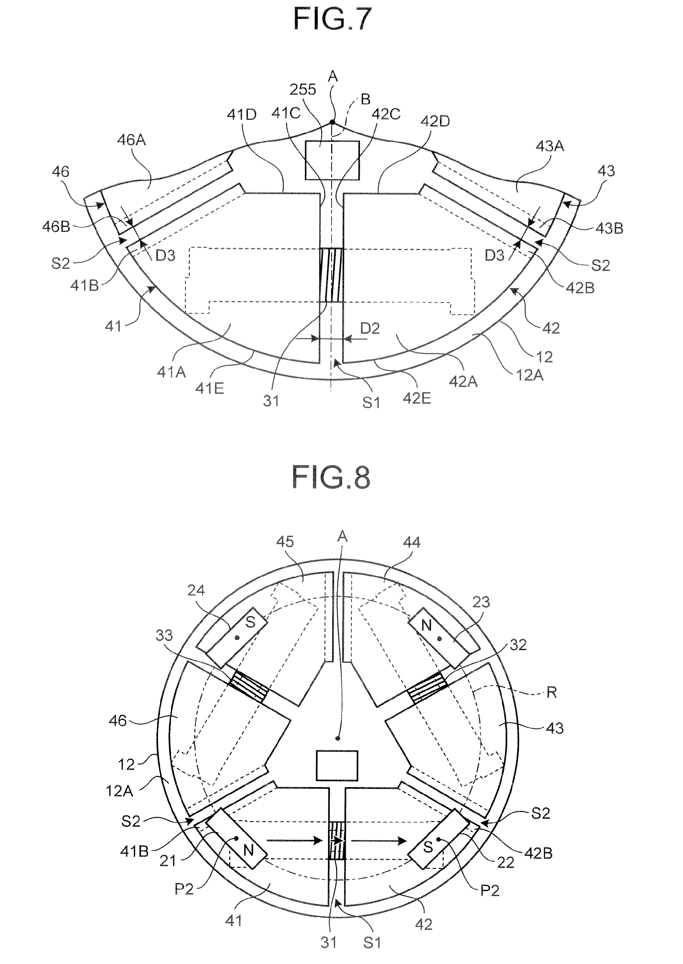

FIG. 5 is a schematic of the second support 12 of the rotation detector 1, three magnetic field detectors provided on the second support 12, and magnetic members covering respective ends of the magnetic field detectors viewed from the direction of the arrow V-V in FIG. 3. FIG. 6 is a schematic of a state where the magnetic members are removed from the structure illustrated in FIG. 5. FIG. 7 is an enlarged view of a part of the second support 12, a magnetic field detector, a pair of magnetic members covering the magnetic field detector, and other components illustrated in FIG. 5.

As illustrated in FIG. 6, the second support 12 is provided with three magnetic field detectors 31, 32, and 33. The magnetic field detectors 31, 32, and 33 are each formed by winding a coil 36 around a wire-shaped, a rod-shaped, or a plate-shaped magnetic element 35. The magnetic field detectors 31, 32, and 33 detect the magnetic field formed by the magnets 21, 22, 23, and 24. The magnetic field detectors 31, 32, and 33 are separated from one another in the circumferential direction around the axial line A on the surface 12A of the second support 12 and fixed at regular intervals in the circumferential direction, for example. In the present embodiment, the magnetic field detectors 31, 32, and 33 are arranged at every central angle of 120 degrees with respect to the axial line A. The magnetic field detector 31 is positioned such that the longitudinal direction of the magnetic element 35 is parallel to a tangent to the circumference R (a tangent at a point where a line passing through a point on the axial line A and an intermediate point of the magnetic element 35 in the longitudinal direction intersects the circumference R). Similarly, the magnetic field detectors 32 and 33 are positioned such that the longitudinal direction of the magnetic element 35 is parallel to a tangent to the circumference R. The magnetic field detectors 31, 32, and 33 are positioned such that one end and the other end of the magnetic element 35 overlap with the circumference R. The magnetic field detectors 31, 32, and 33 are arranged such that the distance between the one end of the magnetic element 35 and the axial line A is equal to the distance between the other end of the magnetic element 35 and the axial line A.

The magnetic field detectors 31, 32, and 33 are provided with a composite magnetic wire as the magnetic element 35. Typically, a composite magnetic wire is a thin-wire ferromagnetic body. A composite magnetic wire is a uniaxial anisotropic composite magnetic body having a unique magnetic property as follows: the magnetization direction in the outer peripheral portion of the composite magnetic wire is changed by application of a relatively small external magnetic field; whereas the magnetization direction in the center portion thereof is not changed without application of a relatively large external magnetic field. If a relatively large external magnetic field large enough to reverse the magnetization direction in the center portion of the composite magnetic wire is applied to the composite magnetic wire in a first direction parallel to the longitudinal direction of the composite magnetic wire, the magnetization direction in the center portion of the composite magnetic wire is aligned to the magnetization direction in the outer peripheral portion thereof. Subsequently, if a relatively small external magnetic field that can reverse the magnetization direction only in the outer peripheral portion of the composite magnetic wire is applied to the composite magnetic wire in a second direction opposite to the first direction and parallel to the longitudinal direction of the composite magnetic wire, the magnetization direction in the center portion of the composite magnetic wire is not changed, and the magnetization direction in the outer peripheral portion alone is reversed. As a result, the magnetization direction varies between the center portion and the outer peripheral portion of the composite magnetic wire. This state is maintained after the external magnetic field is removed.

An external magnetic field is applied, in the first direction, to the composite magnetic wire in which the center portion is magnetized in the first direction and the outer peripheral portion is magnetized in the second direction. The strength of the external magnetic field is set low at first and then is gradually increased. When the strength of the external magnetic field exceeds certain strength, a large Barkhausen effect is caused, and the magnetization direction in the outer peripheral portion of the composite magnetic wire is rapidly reversed from the second direction to the first direction. The rapid reversal of the magnetization direction of the composite magnetic wire generates electromotive force. The electromotive force causes the coil wound around the composite magnetic wire to output an electrical pulse signal that sharply rises in a positive direction, for example.

An external magnetic field is applied, in the second direction, to the composite magnetic wire in which both the center portion and the outer peripheral portion are magnetized in the first direction. Also in this case, the strength of the external magnetic field is set low at first and then is gradually increased. When the strength of the external magnetic field exceeds certain strength, the magnetization direction in the outer peripheral portion of the composite magnetic wire is rapidly reversed from the first direction to the second direction. The rapid reversal of the magnetization direction of the composite magnetic wire generates electromotive force. The electromotive force causes the coil wound around the composite magnetic wire to output an electrical pulse signal that sharply rises in a negative direction, for example.

The magnetic field detectors 31, 32, and 33 are each provided with such a composite magnetic wire as the magnetic element 35. If an external magnetic field is applied to the magnetic element 35 to change the magnetization direction in the outer peripheral portion of the magnetic element 35, the coil 36 wound around the magnetic element 35 outputs an electrical pulse signal (hereinafter, referred to as a "detection pulse"). In the rotation detector 1, the external magnetic field applied to the magnetic element 35 corresponds to a magnetic field formed by the magnet 21 and the magnet 22, a magnetic field formed by the magnet 22 and the magnet 23, a magnetic field formed by the magnet 23 and the magnet 24, and a magnetic field formed by the magnet 24 and the magnet 21. In terms of any one of the magnetic elements 35, rotation of the first support 11 sequentially applies the four magnetic fields to the magnetic element 35. The four magnetic fields are not magnetic fields large enough to change the magnetization directions both in the center portion and the outer peripheral portion of the magnetic element 35 but magnetic fields large enough to change the magnetization direction only in the outer peripheral portion of the magnetic element 35. Based on the positional relation between the magnetic element 35 and the magnets 21, 22, 23, and 24, every time the magnetic field applied to the magnetic element 35 is switched, the magnetization direction in the outer peripheral portion of the magnetic element 35 is changed. In association with this, the coil 36 wound around the magnetic element 35 outputs a detection pulse.

As described above, the magnets 21, 22, 23, and 24 are arranged at intervals of 90 degrees, whereas the magnetic field detectors 31, 32, and 33 are arranged at intervals of 120 degrees. As a result, timings at which the magnetic field detectors 31, 32, and 33 output a detection pulse do not coincide with one another while the first support 11 is rotating. By performing predetermined processing with the detection pulse output from the magnetic field detectors 31, 32, and 33 at different timings, it is possible to detect the number of rotations and the direction of rotation of the shaft 213.

As illustrated in FIG. 5, one end and the other end of the magnetic field detector 31 are covered with the magnetic members 41 and 42, respectively. One end and the other end of the magnetic field detector 32 are covered with the magnetic members 43 and 44, respectively. One end and the other end of the magnetic field detector 33 are covered with the magnetic members 45 and 46, respectively. The magnetic members 41 and 42, the magnetic members 43 and 44, and the magnetic members 45 and 46 are examples of a unit that forms a magnetic path.

The magnetic members 41 and 42 will now be specifically described. As illustrated in FIG. 7, the magnetic members 41 and 42 are each made of a magnetic material, such as iron. The magnetic members 41 and 42 are arranged on the surface 12A of the second support 12 and fixed to the second support 12. The magnetic field detector 31 and the magnetic members 41 and 42 are not in contact with each other. The magnetic member 41 is not in contact with any one of the other magnetic members 42 to 46. The magnetic member 42 is not in contact with any one of the other magnetic members 41 and 43 to 46.

The magnetic member 41 is formed of a flat plate portion 41A and a side plate portion 41B. The flat plate portion 41A spreads parallel to the surface 11A of the first support 11 or the surface 12A of the second support 12 above the one end of the magnetic field detector 31. The flat plate portion 41A covers a portion facing the first support 11 at the one end of the magnetic field detector 31 in the longitudinal direction. The flat plate portion 41A spreads toward the inner peripheral side and the outer peripheral side of the second support 12 from a position corresponding to the one end of the magnetic field detector 31 in the longitudinal direction. The flat plate portion 41A also covers areas on the inner peripheral side and the outer peripheral side with respect to the one end of the magnetic field detector 31 in the longitudinal direction in the second support 12.

The side plate portion 41B is formed by folding one end of the flat plate portion 41A in the circumferential direction toward the second support 12. The side plate portion 41B is formed perpendicularly to the surface 12A of the second support 12 and the flat plate portion 41A. The side plate portion 41B covers the end surface of the one end of the magnetic field detector 31 in the longitudinal direction (left end surface in FIG. 7). The lower end of the side plate portion 41B is fixed to the second support 12, whereby the whole magnetic member 41 is fixed to the second support 12.

The magnetic member 42 has a line-symmetric shape to the magnetic member 41 with respect to a reference line B. Similarly to the magnetic member 41, the magnetic member 42 is formed of a flat plate portion 42A and a side plate portion 42B. The flat plate portion 42A covers a portion facing the first support 11 at the other end of the magnetic field detector 31 in the longitudinal direction. The flat plate portion 42A spreads toward the inner peripheral side and the outer peripheral side of the second support 12 from a position corresponding to the other end of the magnetic field detector 31 in the longitudinal direction. The flat plate portion 42A also covers areas on the inner peripheral side and the outer peripheral side with respect to the other end of the magnetic field detector 31 in the longitudinal direction in the second support 12. The side plate portion 42B covers the end surface of the other end of the magnetic field detector 31 in the longitudinal direction (right end surface in FIG. 7). The lower end of the side plate portion 42B is fixed to the second support 12, whereby the whole magnetic member 42 is fixed to the second support 12.

The magnetic member 41 and the magnetic member 42 extend in respective directions closer to each other toward an intermediate part of the magnetic field detector 31 in the longitudinal direction. A facing end surface 41C of the magnetic member 41 and a facing end surface 42C of the magnetic member 42 face each other with a gap S1 interposed therebetween at the intermediate part of the magnetic field detector 31 in the longitudinal direction. The facing end surfaces 41C and 42C extend in a direction perpendicular to the axial line A and perpendicular to the longitudinal direction of the magnetic field detector 31. Furthermore, the facing end surfaces 41C and 42C extend from the inner peripheral side of the second support 12 to the outer peripheral side of the second support 12 via a position corresponding to the intermediate part of the magnetic field detector 31 in the longitudinal direction while maintaining the clearance therebetween. As illustrated in FIG. 7, a distance D2 of the gap S1 between the facing end surface 41C and the facing end surface 42C is set to a predetermined value, which will be described later in detail.

An inner peripheral end surface 41D facing the axial line A in the magnetic member 41 extends in a direction parallel to the longitudinal direction of the magnetic field detector 31. Similarly, an inner peripheral end surface 42D facing the axial line A in the magnetic member 42 extends in a direction parallel to the longitudinal direction of the magnetic field detector 31. By contrast, an outer peripheral end surface 41E of the magnetic member 41 and an outer peripheral end surface 42E of the magnetic member 42 extend in an arc shape along the periphery of the second support 12.

As illustrated in FIG. 7, a large part of the portion facing the first support 11 in the magnetic field detector 31 is covered with the magnetic members 41 and 42, and a small part thereof is exposed to the first support 11. In the portion facing the first support 11 in the magnetic field detector 31, the area of the portion covered with the magnetic member 41 and the magnetic member 42 is larger than the area of the potion thus exposed.

The structure of the magnetic members 43 and 44, the positional relation between the magnetic members 43 and 44 and the magnetic field detector 32, and other elements are the same as the structure of the magnetic members 41 and 42, the positional relation between the magnetic members 41 and 42 and the magnetic field detector 31, and other elements, respectively. The structure of the magnetic members 45 and 46, the positional relation between the magnetic members 45 and 46 and the magnetic field detector 33, and other elements are the same as the structure of the magnetic members 41 and 42, the positional relation between the magnetic members 41 and 42 and the magnetic field detector 31, and other elements, respectively. A distance D3 of a gap S2 between the side plate portion 41B of the magnetic member 41 and a side plate portion 46B of the magnetic member 46 adjacent to each other in the circumferential direction is set smaller than the distance D2, for example. The same applies to the other side plate portions adjacent to each other (42B and 43B, and 44B and 45B).

As illustrated in FIG. 5, pairs of magnetic members arranged adjacent to each other in the circumferential direction (41 and 42, 42 and 43, 43 and 44, 44 and 45, 45 and 46, and 46 and 41) among the magnetic members 41 to 46 are positioned close to each other. This forms a continuous arrangement of the magnetic members 41 to 46. The continuous arrangement covers the area above the outer peripheral side of the surface 12A of the second support 12 over nearly the whole circumference with the magnetic field detectors 31, 32, and 33 interposed between the continuous arrangement and the second support 12. In other words, on the plane including the surfaces of the flat plate potions 41A to 46A of the magnetic members 41 to 46, the area of the space corresponding to the gaps S1 and S2 between the respective pairs of magnetic members adjacent to each other among the magnetic members 41 to 46 is significantly smaller than the area of the surfaces of the flat plate potions 41A to 46A of the magnetic members 41 to 46. The continuous arrangement of the magnetic members 41 to 46 can control magnetic force generated between the magnets 21, 22, 23, and 24 and the magnetic field detectors 31, 32, and 33 and homogenize the magnetic force in the circumferential direction. This can suppress cogging occurring in association with rotation of the first support 11.

The following describes the shapes (dimensions) of the magnets 21, 22, 23, and 24 in detail with reference to FIG. 4 and FIG. 8. FIG. 8 illustrates an operation of the rotation detector 1. FIG. 8 is a schematic of the rotation detector 1 viewed from the direction of the arrow VIII-VIII in FIG. 3. For convenience of explanation, FIG. 8 does not illustrate the housing 2, the shaft 213, and the first support 11. Because the shapes (dimensions) of the magnets 21, 22, 23, and 24 are the same, a specific explanation will be made of the magnet 21.

The magnet 21 is formed in a rectangular parallelepiped shape that is long in the tangential direction. In other words, the magnet 21 has a rectangular parallelepiped shape that is long in the tangential direction viewed from the second support 12 side. Specifically, the dimension D1 of the magnet 21 in the tangential direction is larger than a dimension D4 of the magnet 21 in the radial direction. In addition, the dimension D1 is larger than the distance D2 of the gap S1 between the facing end surfaces 41C and 42C of the magnetic members 41 and 42 arranged adjacent to each other.

The following describes the dimension D1 of the magnet 21 in the tangential direction in greater detail based on the positional relation between the magnetic field detector 31 and the magnetic member 41, for example. As described above, the magnetic field detector 31 is positioned such that the one end and the other end of the magnetic element 35 in the longitudinal direction overlap with the circumference R. An intersection point at which the one end and the other end of the magnetic element 35 overlap with the circumference R is referred to as an overlapping point P1 (refer to FIG. 6). The magnetic element 35 is not necessarily arranged at a position overlapping with the circumference R. The magnetic elements 35 of the magnetic field detectors 31, 32, and 33 may be arranged inside or outside of the circumference R, for example. Specifically, the magnetic element 35 simply needs to be arranged at a position to which the magnets 21, 22, 23, and 24 moving on the circumference R can apply an external magnetic field that causes a large Barkhausen effect. In this case, an intersection point at which the one end and the other end of the magnetic element 35 virtually overlap with the circumference R corresponds to the overlapping point P1.

As described above, the magnets 21, 22, 23, and 24 move on the circumference R along with rotation of the first support 11. In other words, the magnets 21, 22, 23, and 24 are arranged in a manner capable of facing the overlapping points P1 at the one end and the other end of the magnetic element 35 of the magnetic field detector 31.

The dimension D1 of the magnet 21 in the tangential direction is set to a length twice as long as the distance from a center point P2 positioned at the center of the magnet 21 in the tangential direction to a position corresponding to the end surface of the side plate portion 41B of the magnetic member 41 when the center point P2 coincides with the overlapping point P1 at one end of the magnetic field detector 31, for example. More preferably, the dimension D1 of the magnet 21 in the tangential direction is set to a length twice as long as the distance from the center point P2 to a position corresponding to the intermediate point in the circumferential direction of the distance D3 of the gap S2 between the side plate portion 41B of the magnetic member 41 and the side plate portion 46B of the magnetic member 46 when the center point P2 coincides with the overlapping point P1 as described above, for example. When the center point P2 of the magnet 21 coincides with the overlapping point P1 at the one end of the magnetic field detector 31, the center point P2 of the magnet 22 coincides with the overlapping point P1 at the other end of the magnetic field detector 31.

The dimension D1 of the magnets 21, 22, 23, and 24 in the tangential direction may be set based on the respective overlapping points P1 on the other magnetic members 42, 43, 44, 45, and 46. The area of the magnet 21 viewed from the second support 12 side is determined by analyzing magnetic field strength required to cause the magnetic field detectors 31, 32, and 33 to output a detection pulse. Based on the analysis result and the dimension D1 of the magnet 21 in the tangential direction, the dimension D4 of the magnet 21 in the radial direction is determined.

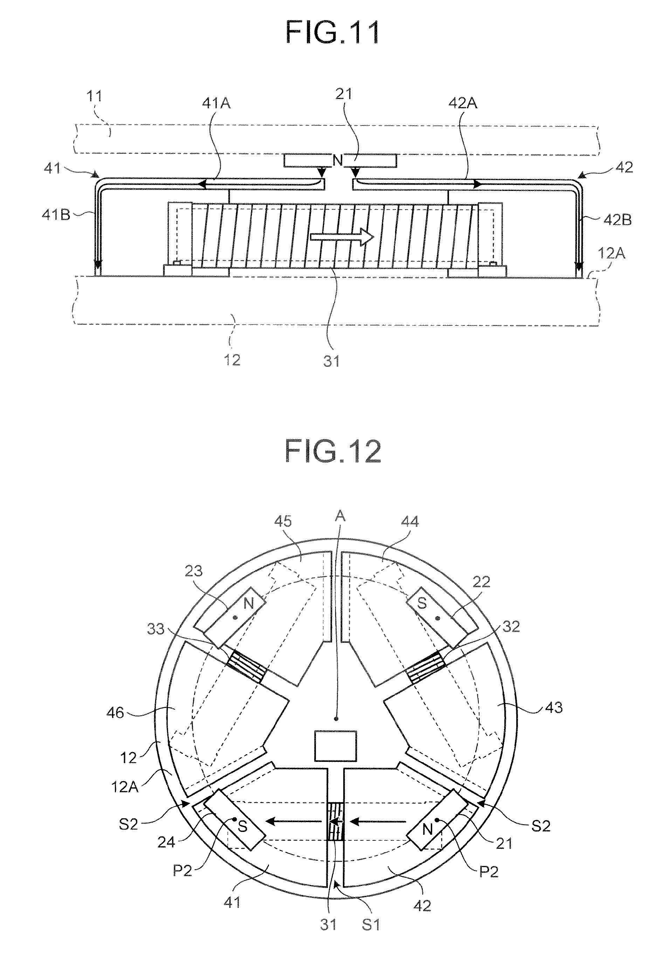

The following describes a basic operation of the rotation detector 1 with reference to FIG. 8 and FIG. 12.

A specific explanation will be made of an operation of the magnetic field detector 31. FIG. 12 illustrates an operation of the rotation detector 1. FIG. 12 is a schematic of the rotation detector 1 viewed from the direction of the arrow VIII-VIII in FIG. 3. For convenience of explanation, FIG. 12 does not illustrate the housing 2, the shaft 213, and the first support 11.

An assumption is made that the first support 11 rotates in the counterclockwise direction in the state where the magnetic element 35 of the magnetic field detector 31 is magnetized in a direction from the other end to the one end, for example. As a result, the magnet 21 of the N-pole comes closer to the one end of the magnetic field detector 31, and the magnet 22 of the S-pole comes closer to the other end of the magnetic field detector 31 as illustrated in FIG. 8. A magnetic field extending from the magnet 21 to the magnet 22 reverses the magnetization direction in the outer peripheral portion of the magnetic element 35 of the magnetic field detector 31. As a result, the magnetization direction of the magnetic element 35 is directed from the one end to the other end. The reversal of the magnetization direction of the magnetic element 35 causes the coil 36 wound around the magnetic element 35 to output a detection pulse that sharply rises in the positive direction, for example.

If the first support 11 continues to rotate in the counterclockwise direction, the magnet 24 of the S-pole comes closer to the one end of the magnetic field detector 31, and the magnet 21 of the N-pole comes closer to the other end of the magnetic field detector 31 as illustrated in FIG. 12. A magnetic field extending from the magnet 21 to the magnet 24 reverses the magnetization direction in the outer peripheral portion of the magnetic element 35 of the magnetic field detector 31. As a result, the magnetization direction of the magnetic element 35 is directed from the other end to the one end. The reversal of the magnetization direction of the magnetic element 35 causes the coil 36 wound around the magnetic element 35 to output a detection pulse that sharply rises in the negative direction, for example.

If the first support 11 continues to rotate, the magnet 23 of the N-pole comes closer to the one end of the magnetic field detector 31, and the magnet 24 of the S-pole comes closer to the other end of the magnetic field detector 31. A magnetic field extending from the magnet 23 to the magnet 24 directs the magnetization direction of the magnetic element 35 of the magnetic field detector 31 from the one end to the other end. This causes the coil 36 to output a detection pulse that sharply rises in the positive direction, for example. If the first support 11 further continues to rotate, the magnet 22 of the S-pole comes closer to the one end of the magnetic field detector 31, and the magnet 23 of the N-pole comes closer to the other end of the magnetic field detector 31. A magnetic field extending from the magnet 23 to the magnet 22 directs the magnetization direction of the magnetic element 35 of the magnetic field detector 31 from the other end to the one end. This causes the coil 36 to output a detection pulse that sharply rises in the negative direction, for example. The magnetic field detectors 32 and 33 operate in the same manner as the magnetic field detector 31.

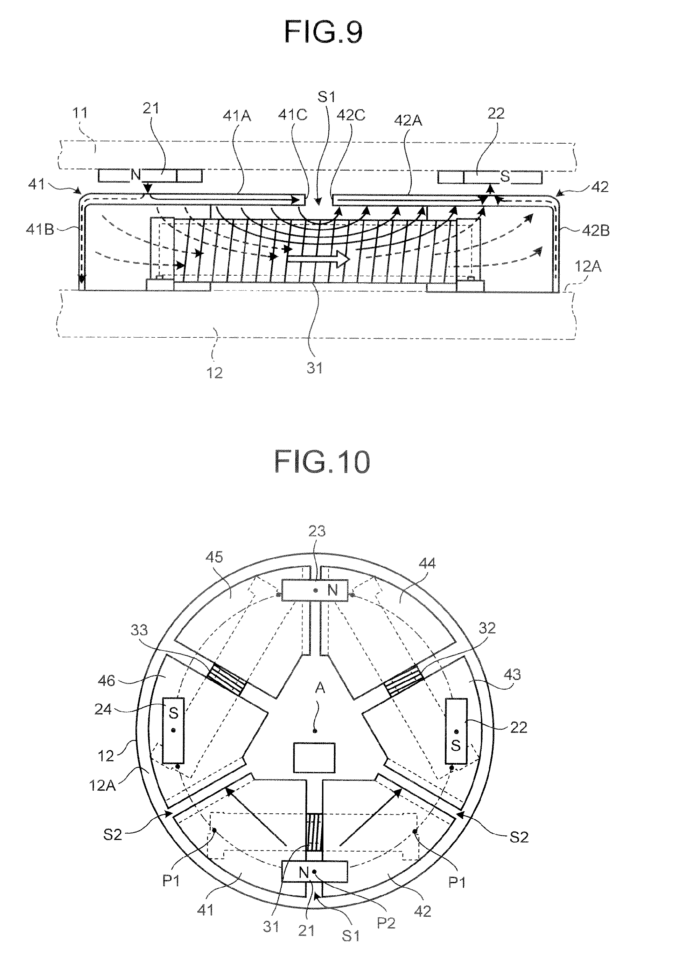

The following specifically describes a magnetic field induction function of the magnetic members 41 and 42 on the magnetic field detector 31 with reference to FIG. 8 to FIG. 12. FIG. 9 and FIG. 11 illustrate paths of the magnetic field in the rotation detector 1. FIG. 10 illustrates an operation of the rotation detector 1. FIG. 10 is a schematic of the rotation detector 1 viewed from the direction of the arrow VIII-VIII in FIG. 3. For convenience of explanation, FIG. 10 does not illustrate the housing 2, the shaft 213, and the first support 11.

An assumption is made that the first support 11 rotates in the counterclockwise direction, whereby the magnet 21 of the N-pole comes closer to the one end of the magnetic field detector 31, and the magnet 22 of the S-pole comes closer to the other end of the magnetic field detector 31 as illustrated in FIG. 8, for example. At this time, a large part of magnetic flux extending from the magnet 21 to the magnet 22 enters not the one end of the magnetic field detector 31 but the magnetic member 41 from the magnet 21 as illustrated in FIG. 9. The magnetic flux entering the magnetic member 41 travels through the flat plate portion 41A of the magnetic member 41 toward the magnetic member 42. The magnetic flux then enters a portion at the intermediate part of the magnetic field detector 31 slightly closer to the one end through the gap S1 between the magnetic member 41 and the magnetic member 42. The magnetic flux entering the magnetic field detector 31 travels through the magnetic field detector 31 toward the other end. The magnetic flux then reaches a portion at the intermediate part of the magnetic field detector 31 slightly closer to the other end. The magnetic flux reaching the portion leaves the magnetic field detector 31 and enters the magnetic member 42. The magnetic flux entering the magnetic member 42 travels through the flat plate portion 42A of the magnetic member 42 toward the magnet 22 and reaches the magnet 22 from the magnetic member 42.

As described above, the magnetic members 41 and 42 induce the magnetic field extending from the magnet 21 to the magnet 22, thereby forming magnetic paths indicated by solid black arrows in FIG. 9. As a result, a large part of the magnetic field is applied to the intermediate part of the magnetic field detector 31. Thus, the magnetic flux density of the intermediate part of the magnetic field detector 31 is made higher than the magnetic flux density of the one end or the other end of the magnetic field detector 31.

Large areas including the portions facing the first support 11 at the one end and the other end of the magnetic field detector 31 are covered with the flat plate portions 41A and 42A of the magnetic members 41 and 42, respectively. Furthermore, the one end surface (left end surface) and the other end surface (right end surface) of the magnetic field detector 31 are covered with the side plate portions 41B and 42B of the magnetic members 41 and 42, respectively. As a result, a magnetic field extending from the one end to the other end of the magnetic field detector 31 is formed around the magnetic field detector 31 in the space covered with the magnetic members 41 and 42 as indicated by black dashed arrows in FIG. 9. Because a large part of the magnetic flux extending from the magnet 21 to the magnet 22 travels along the magnetic paths indicated by the black solid arrows in FIG. 9, the strength of the magnetic field indicated by the black dashed arrows in FIG. 9 is lower than the strength of the magnetic field indicated by the black solid arrows in FIG. 9. By applying the magnetic field indicated by the black dashed arrows in FIG. 9 to the magnetic field detector 31, the magnetic flux density is increased throughout the magnetic field detector 31 while the magnetic flux density of the intermediate part of the magnetic field detector 31 remains higher than that of the one end or the other end.

Application of such a magnetic field to the magnetic field detector 31 magnetizes the outer peripheral portion of the magnetic element 35 of the magnetic field detector 31 in a direction indicated by a white arrow in FIG. 9, that is, in a direction from the one end to the other end of the magnetic element 35. In the case where the magnetization direction in the outer peripheral portion of the magnetic element 35 is a direction from the other end to the one end of the magnetic element 35, the magnetization direction in the outer peripheral portion of the magnetic element 35 is reversed. Thus, the coil 36 wound around the magnetic element 35 outputs a detection pulse that sharply rises in the positive direction, for example.

If the first support 11 further rotates in the counterclockwise direction by 45 degrees, the magnet 21 of the N-pole comes closer to the intermediate part of the magnetic field detector 31 as illustrated in FIG. 10. At this time, a large part of the magnetic flux extending from the magnet 21 to the magnet 24 enters the magnetic member 41 from the magnet 21, whereas a large part of the magnetic flux extending from the magnet 21 to the magnet 22 enters the magnetic member 42 from the magnet 21 as illustrates in Fig. 11. The magnetic flux entering the magnetic member 41 travels through the magnetic member 41 toward the magnet 24, whereas the magnetic flux entering the magnetic member 42 travels through the magnetic member 42 toward the magnet 22. This can suppress entry of the magnetic flux into the magnetic field detector 31. Because the magnetic member 41 and the magnetic member 46 are separated from each other with the gap S2 interposed therebetween as illustrated in FIG. 10, a large part of the magnetic flux travelling through the magnetic member 41 does not enter the magnetic member 46. Similarly, because the magnetic member 42 and the magnetic member 43 are separated from each other with the gap S2 interposed therebetween, a large part of the magnetic flux travelling through the magnetic member 42 does not enter the magnetic member 43.

The dimension D1 of the magnet 21 in the tangential direction is larger than the distance D2 between the magnetic member 41 and the magnetic member 42. When the magnet 21 comes closer to the intermediate part of the magnetic field detector 31, the distances between the magnet 21 and the respective magnetic members 41 and 42 are certainly smaller than the distance between the magnet 21 and the magnetic field detector 31. This ensures that large parts of the magnetic flux extending from the magnet 21 to the magnets 24 and 22 enter the magnetic members 41 and 42, respectively. The large areas including the portions facing the first support 11 at the one end and the other end of the magnetic field detector 31 are covered with the flat plate portions 41A and 42A of the magnetic members 41 and 42, respectively. Furthermore, the one end surface (left end surface) and the other end surface (right end surface) of the magnetic field detector 31 are covered with the side plate portions 41B and 42B of the magnetic members 41 and 42, respectively. When the magnet 21 comes closer to the intermediate part of the magnetic field detector 31, the magnetic field extending from the magnet 21 to the magnets 24 and 22 is induced by the magnetic members 41 and 42 in a manner avoiding the magnetic field detector 31. As a result, a large part of the magnetic flux in the magnetic field does not enter the magnetic field detector 31, whereby the magnetization direction in the outer peripheral portion of the magnetic element 35 of the magnetic field detector 31 does not change. The direction indicated by a white arrow in FIG. 11 is the same as the direction indicated by the white arrow in FIG. 9. This means that the magnetization direction of the magnetic element 35 does not change. Thus, the coil 36 wound around the magnetic element 35 outputs no detection pulse.

If the first support 11 further rotates in the counterclockwise direction by 45 degrees, the magnet 24 of the S-pole comes closer to the one end of the magnetic field detector 31, and the magnet 21 of the N-pole comes closer to the other end of the magnetic field detector 31 as illustrated in FIG. 12. At this time, the magnetic field extending from the magnet 21 to the magnet 24 is induced by the magnetic members 41 and 42, thereby traveling along paths similar to the paths of the magnetic field indicated by the black solid arrows and the black dashed arrows in FIG. 9 in the opposite direction.

Application of such a magnetic field to the magnetic field detector 31 magnetizes the outer peripheral portion of the magnetic element 35 of the magnetic field detector 31 in a direction from the other end to the one end of the magnetic element 35. In the case where the magnetization direction in the outer peripheral portion of the magnetic element 35 is a direction from the one end to the other end of the magnetic element 35, the magnetization direction in the outer peripheral portion of the magnetic element 35 is reversed. Thus, the coil 36 wound around the magnetic element 35 outputs a detection pulse that sharply rises in the negative direction, for example.

As described above, when magnets having different polarities come closer to the one end and the other end of the magnetic field detector 31, the magnetic field induction function of the magnetic members 41 and 42 can induce the magnetic flux formed by the magnets such that the magnetic flux passes thorough not the one end and the other end of the magnetic field detector 31 but the intermediate part thereof. Furthermore, when a magnet comes closer to the intermediate part of the magnetic field detector 31, the magnetic field induction function can suppress entry of the magnetic flux formed by the magnet into the magnetic field detector 31.

As a result, when a pair of magnets having different polarities comes closer to the one end and the other end of the magnetic field detector 31, the magnetic flux density can be increased mainly in the intermediate part of the magnetic element 35 of the magnetic field detector 31. By contrast, when a magnet comes closer to the intermediate part of the magnetic field detector 31, the magnetic flux density can be decreased throughout the magnetic element 35 of the magnetic field detector 31. This makes it possible to increase the magnetic flux density of the magnetic element 35 of the magnetic field detector 31 only when magnets having different polarities come closer to the one end and the other end of the magnetic field detector 31. The magnetization direction of the magnetic element 35 can be changed only when magnets having different polarities come closer to the one end and the other end of the magnetic field detector 31. In other words, it is possible to prevent the magnetization direction of the magnetic element 35 of the magnetic field detector 31 from changing when magnets having different polarities do not come closer to the one end and the other end of the magnetic field detector 31.

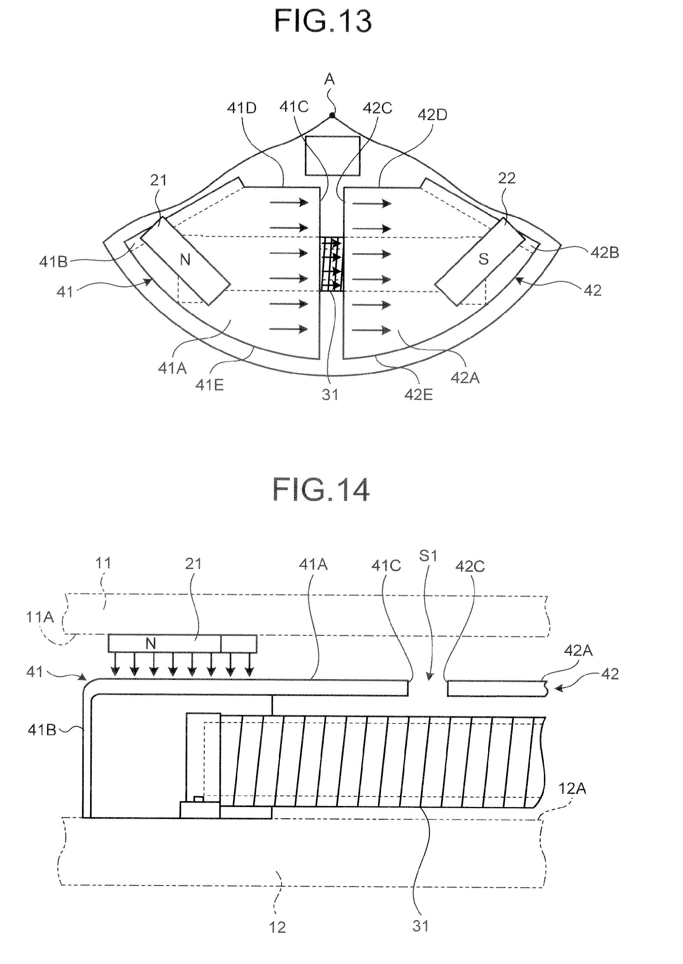

The magnetic members 41 and 42 have several structural characteristics to increase performance of the magnetic field induction function. The following describes these structural characteristics with reference to FIG. 13. Arrows in FIG. 13 schematically indicate the magnetic field formed in the magnetic members 41 and 42 when the magnets 21 and 22 come closer to the one end and the other end of the magnetic field detector 31, respectively.

The inner peripheral end surfaces 41D and 42D facing the axial line A in the magnetic members 41 and 42 extend in a direction parallel to the longitudinal direction of the magnetic field detector 31. When the magnets 21 and 22 come closer to the one end and the other end of the magnetic field detector 31, respectively, the magnetic flux travelling through the magnetic members 41 and 42 travels in a direction approximately parallel to the longitudinal direction of the magnetic field detector 31. This can suppress diffusion of the magnetic flux travelling through the magnetic members 41 and 42 in a direction away from the magnetic field detector 31 (specifically, a direction toward the outside of the magnetic members 41 and 42 from the inner peripheral end surfaces 41D and 42D) while travelling.

The facing end surfaces 41C and 42C of the magnetic members 41 and 42 extend in a direction perpendicular to the axial line A and perpendicular to the longitudinal direction of the magnetic field detector 31. When the magnets 21 and 22 come closer to the one end and the other end of the magnetic field detector 31, respectively, the magnetic flux travelling through the magnetic members 41 and 42 travels in a direction approximately parallel to the longitudinal direction of the magnetic field detector 31. This can suppress diffusion of the magnetic flux travelling through the magnetic members 41 and 42 in a direction away from the magnetic field detector 31 (specifically, a direction toward the outside of the magnetic member 41 from the facing end surface 41C) while travelling.

The structural characteristics can enhance the effect of the magnetic members 41 and 42 for inducing the magnetic field extending from the magnet 21 to the magnet 22 to the magnetic field detector 31 when the magnets 21 and 22 come closer to the one end and the other end of the magnetic field detector 31, respectively. This can put the magnetic field detector 31 into a stable state with high magnetic flux density.

The explanation has been made of the magnetic field induction function of the magnetic members 41 and 42 on the magnetic field detector 31. The magnetic field induction function of the magnetic members 43 and 44 on the magnetic field detector 32 and the magnetic field induction function of the magnetic members 45 and 46 on the magnetic field detector 33 are the same as the magnetic field induction function of the magnetic members 41 and 42 on the magnetic field detector 31. The magnetic field induction function of the magnetic members 41 to 46 can prevent a hard-to-predict change in the magnetization direction of the magnetic element 35 included in the magnetic field detectors 31, 32, and 33. Thus, it is possible to increase the detection accuracy of rotation of the shaft 213.

The motor 211 generates leakage flux. Generally, the leakage flux extends radially from the axial line A. The positional relation between the leakage flux and the magnetization directions of the magnetic field detectors 31, 32, and 33 is a twisted positional relation or a crossed positional relation. This can suppress an influence of the leakage flux generated from the motor 211 on the operation of the magnetic field detectors 31, 32, and 33 for detecting the magnetic field formed by the magnets 21, 22, 23, and 24. Thus, it is possible to prevent the magnetic field detectors 31, 32, and 33 from malfunctioning because of the leakage flux. As a result, the magnetic field detectors 31, 32, and 33 can be arranged closer to the motor 211, making it possible to downsize the motor unit 210 formed of the rotation detector 1 and the motor 211.

With the magnetic field detectors 31, 32, and 33, no MR element or no Hall element for detecting multiple rotation mounted on a circuit board is required. As a result, it is not necessary to secure the mounting space for the element on the board. This can achieve space-saving of the circuit board and increase the flexibility in design.

The following describes an action for suppressing cogging performed by the rotation detector 1 included in the motor unit 210 according to the present embodiment with reference to FIG. 14 to FIG. 17. FIG. 14 to FIG. 17 illustrate the positional relation between the magnet 21 and the magnetic members 41 and 42 (the gap S1) in the rotation detector 1. A specific explanation will be made of the magnet 21, the magnetic field detector 31, and the magnetic members 41 and 42. The first support 11 rotates in the direction from the one end to the other end of the magnetic field detector 31 (counterclockwise direction in FIG. 8).

As illustrated in FIG. 14, when rotation of the first support 11 moves the whole magnet 21 to a position facing the flat plate portion 41A of the magnetic member 41, almost all the magnetic flux formed by the magnet 21 extends to the magnetic member 41 facing the magnet 21 (refer to arrows in FIG. 14). In other words, lines of magnetic force formed by the magnet 21 are in a linear state extending in the same direction with respect to the direction of rotation (or the tangential direction). This is a magnetically stable state, and torque applied to the rotation of the first support 11 remains constant.

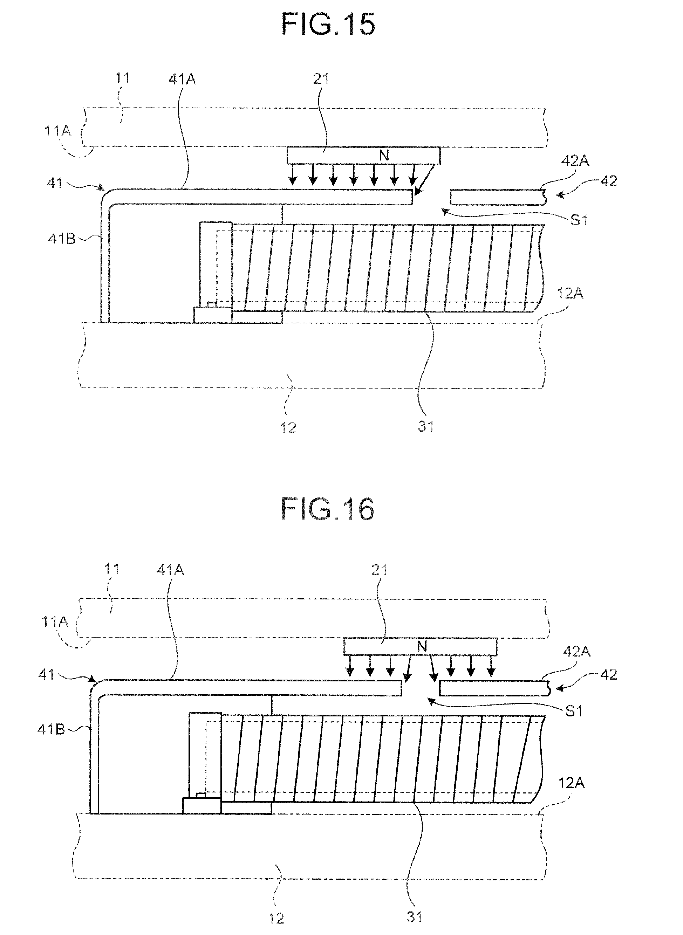

If the first support 11 further rotates and the other end of the magnet 21 starts to face the gap S1 between the magnetic member 41 and the magnetic member 42 as illustrated in FIG. 15, the magnetic flux at the other end among the magnetic flux formed by the magnet 21 extends to the magnetic member 41 positioned on the downstream in a direction (direction toward the one end) opposite to the direction of rotation of the first support 11 (indicated by an arrow in FIG. 15). In other words, the other end of the magnet 21 that starts to pass over the gap S1 forms a non-linear line of magnetic force in the direction opposite to the direction of rotation of the first support 11. The line of magnetic force in the direction opposite to the direction of rotation usually acts as force (cogging torque) to reverse the first support 11 in a direction opposite to the direction of rotation. Because the magnet 21 is long in the tangential direction, the portion (the other end) that generates the cogging torque is significantly small in the magnet 21, and a large part of the magnet 21 faces the flat plate portion 41A of the magnetic member 41 in relative terms. As a result, the distribution of the magnetic flux density of the magnet 21 is homogenized in the circumferential direction. In other words, the lines of magnetic force formed by the magnet 21 remain in an approximately linear state. This can maintain the magnetically stable state, thereby reducing the cogging torque relatively.

The magnet 21 is longer than the gap S1 between the magnetic member 41 and the magnetic member 42. If the first support 11 further rotates in the counterclockwise direction, the magnet 21 faces the gap S1 between the magnetic member 41 and the magnetic member 42 in a manner covering the gap S1 as illustrated in FIG. 16. In this state, the magnetic flux formed by the magnet 21 is diffused substantially homogenously to the magnetic member 41 and the magnetic member 42 (refer to arrows in FIG. 16). In other words, the lines of magnetic force formed by the magnet 21 remain in an approximately linear state. This can keep the torque applied to the rotation of the first support 11 constant, thereby suppressing the cogging torque. In this state, the magnetic flux traveling through the magnetic members 41 and 42 are bilaterally symmetric. As a result, the magnetic field extending from the magnet 21 to the magnet 22 and the magnetic field extending from the magnet 21 to the magnet 24 cancel each other out around the magnetic field detector 31 covered with the magnetic members 41 and 42, thereby making the magnetic field nearly zero.

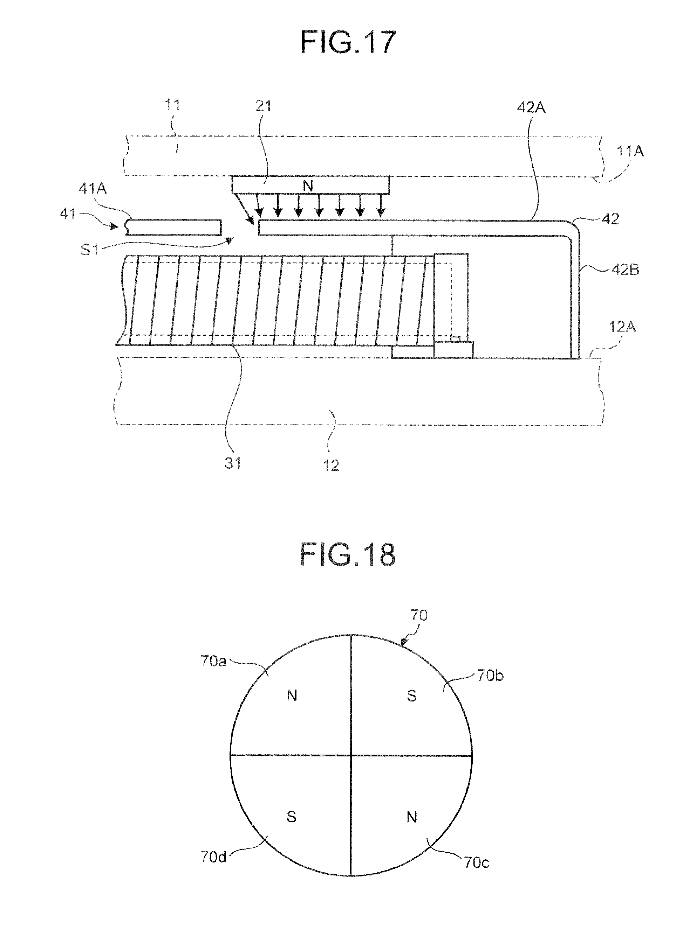

If the first support 11 further rotates and one end of the magnet 21 facing the gap S1 between the magnetic member 41 and the magnetic member 42 starts to come closer to the one end of the magnetic member 42 as illustrated in FIG. 17, the magnetic flux formed by the one end of the magnet 21 extends to the magnetic member 42 positioned on the downstream in the direction of rotation of the first support 11 (direction toward the other end) (indicated by an arrow in FIG. 17). In other words, the one end of the magnet 21 that passes over the gap S1 forms a non-linear line of magnetic force in a direction the same as the direction of rotation of the first support 11. The non-linear line of magnetic force (magnetic flux at the one end of the magnet 21) usually acts as force to forward the first support 11 in the direction of rotation. Because the magnet 21 is long in the tangential direction, the portion that generates the force to forward the first support 11 in the direction of rotation is significantly small in the magnet 21, and a large part of the magnet 21 faces the flat plate portion 42A of the magnetic member 42 in relative terms. As a result, the distribution of the magnetic flux density of the magnet 21 is homogenized in the circumferential direction. In other words, the lines of magnetic force formed by the magnet 21 remain in an approximately linear state. This can reduce torque fluctuations in the rotation of the first support 11.

The same applies to the action for reducing cogging torque of the other magnets 22, 23, and 24 on the other magnetic members 43, 44, 45, and 46.

In the rotation detector 1 included in the motor unit 210 according to the present embodiment, the dimension D1 of the magnet 21 in the tangential direction is larger than the dimension D4 in the radial direction and is larger than the distance D2 of the gap S1 between the magnetic member 41 and the magnetic member 42, for example. Thus, the portion that generates cogging torque when the magnet 21 starts to face the gap S1 is significantly small, and a large part of the magnet 21 faces the magnetic member 41, for example. As a result, the distribution of the magnetic flux density of the magnet 21 is relatively homogenized in the circumferential direction, which is a magnetically stable state. This can relatively reduce torque fluctuations in rotation of the first support 11, that is, reduce cogging torque. Suppression of cogging makes it possible to detect rotation of the shaft 213 accurately.

The dimension D1 of the magnets 21, 22, 23, and 24 in the tangential direction according to the present embodiment is the smallest dimension. The dimension D1 of the magnets 21, 22, 23, and 24 in the tangential direction may be set to an arbitrary value within a range of equal to or larger than the length according to the present embodiment to equal to or smaller than the length of a chord subtending an arc corresponding to one-fourth of the entire perimeter (whole circumference) of the first support 11.

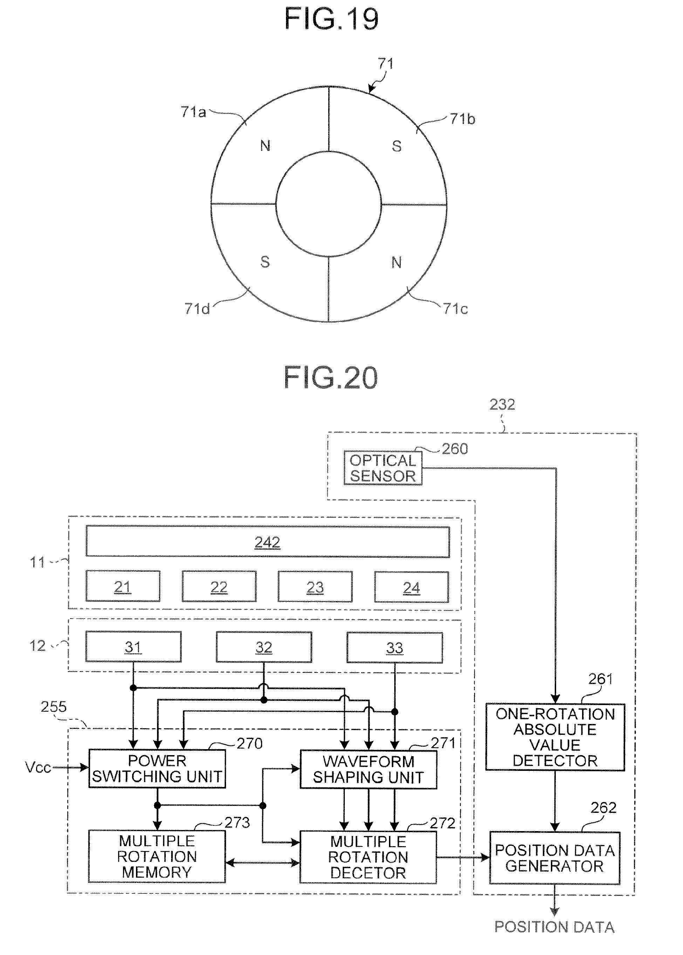

As illustrated in FIG. 18, a first support 70 itself may be a disk-shaped magnet formed of four magnetic pieces 70a, 70b, 70c, and 70d divided by a central angle of 90 degrees with respect to the axial line A, for example. Alternatively, as illustrated in FIG. 19, a first support 71 itself may be a ring-shaped magnet formed of four magnetic pieces 71a, 71b, 71c, and 71d divided by a central angle of 90 degrees with respect to the axial line A, for example. The magnet may be formed of an electromagnet.

By setting the length of the magnets 21, 22, 23, and 24 in the tangential direction to a value within the range described above, it is possible to suppress cogging and to supply energy (magnetic flux density) required to magnetize the magnetic element 35 of the magnetic field detectors 31, 32, and 33 in a predetermined direction to the magnetic element 35. This can prevent a hard-to-predict change in the magnetization direction of the magnetic element 35, thereby increasing the detection accuracy of rotation of a detection target.

### Detection of the Rotation Amount

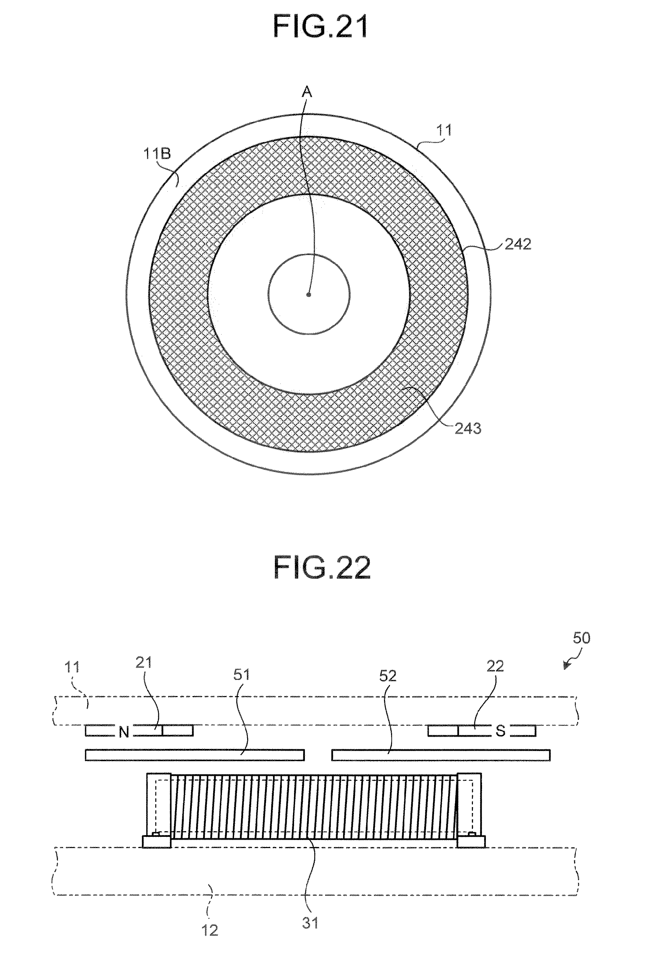

The following describes detection of the rotation amount x of the motor 211 with reference to FIG. 2, FIG. 3, FIG. 20, and FIG. 21. FIG. 20 illustrates a configuration relating to signal processing for detecting the rotation amount x of the motor 211 in the rotation detector 1. FIG. 21 illustrates a reflective disk arranged on the first support 11.

The rotation detector 1 detects the number of rotations and the rotational position (absolute position) of the shaft 213. Based on the number of rotations and the rotational position of the shaft 213, the rotation detector 1 detects the rotation amount x of the motor 211.

As illustrated in FIG. 20, the number of rotations of the shaft 213 is detected by the magnets 21, 22, 23, and 24 provided on the surface 11A of the first support 11, the magnetic field detectors 31, 32, and 33 provided on the surface 12A of the second surface 12, the magnetic members 41 to 46 covering the ends of the magnetic field detectors 31, 32, and 33, and a rotation number detector 255 (refer to FIG. 5) provided on the second support 12. The configuration that includes the magnets 21, 22, 23, and 24, the magnetic field detectors 31, 32, and 33, the magnetic members 41 to 46, and the rotation number detector 255, and that detects the number of rotations of the shaft 213 is hereinafter referred to as a rotation number detector 237 (refer to FIG. 2).

As illustrated in FIG. 20, the rotational position of the shaft 213 is detected by a reflective disk 242 (refer to FIG. 3) provided on the first support 11 and a light detector 232 (refer to FIG. 3) provided on the base 233 of the housing 2. The configuration that includes the reflective disk 242 and the light detector 232 and detects the rotational position of the shaft 213, and that detects the rotational position of the shaft 213 is hereinafter referred to as a rotational position detector 238 (refer to FIG. 2). The magnetic field detectors 31, 32, and 33 are examples of a unit that detects a magnetic field.

The following describes the rotation number detector 255 of the rotation number detector 237 and the reflective disk 242 and the light detector 232 of a rotational position detector 238.

The rotation number detector 255 of the rotation number detector 237 will now be described. The rotation number detector 255 is a packaged integrated circuit, for example. As illustrated in FIG. 5, the rotation number detector 255 is arranged on the surface 12A of the second support 12. The rotation number detector 255 is arranged near the center of the surface 12A so as to be located close to or adjacent to each of the magnetic field detectors 31, 32, and 33.

As illustrated in FIG. 20, the rotation number detector 255 includes a power switching unit 270, a waveform shaping unit 271, a multiple rotation detector 272 (an example of a rotation number detector), and a multiple rotation memory 273 (an example of a storage unit). In the case where no power-supply voltage Vcc is supplied from the outside, the rotation number detector 255 can detect the number of rotations of the shaft 213 based on electric power generated from a detection pulse output from the magnetic field detectors 31, 32, and 33.

If power-supply voltage Vcc is supplied from the outside, the power switching unit 270 supplies the power-supply voltage Vcc to the waveform shaping unit 271, the multiple rotation detector 272, and the multiple rotation memory 273. By contrast, if no power-supply voltage Vcc is supplied from the outside, the power switching unit 270 supplies a voltage generated from a detection pulse output from the magnetic field detectors 31, 32, and 33 to the waveform shaping unit 271, the multiple rotation detector 272, and the multiple rotation memory 273.

The detection pulses output from the magnetic field detectors 31, 32, and 33 include a detection pulse that rises in the positive direction and a detection pulse that rises in the negative direction. The power switching unit 270 generates a voltage from the detection pulse that rises in the positive direction among the detection pulses. The power switching unit 270 then supplies the voltage to the waveform shaping unit 271, the multiple rotation detector 272, and the multiple rotation memory 273. The detection pulse that rises in the negative direction output from the magnetic field detectors 31, 32, and 33 may be used to generate the voltage with a full-wave rectifier, for example.

The waveform shaping unit 271 selects the detection pulse that rises in the positive direction from the detection pulses output from the magnetic field detectors 31, 32, and 33. The waveform shaping unit 271 shapes the waveform of the detection pulse thus selected into a rectangular waveform and outputs the detection pulse thus shaped to the multiple rotation detector 272. Based on the detection pulse received from the waveform shaping unit 271, the multiple rotation detector 272 detects the number of rotations of the shaft 213.

Specifically, the multiple rotation detector 272 determines from which of the magnetic field detectors 31, 32, and 33 the detection pulse received from the waveform shaping unit 271 is output. The multiple rotation detector 272 then stores the result in the multiple rotation memory 273. If it is determined that the detection pulse corresponds to the magnetic field detector 31, the multiple rotation detector 272 stores data "00" in the multiple rotation memory 273, for example. If it is determined that the detection pulse corresponds to the magnetic field detector 32, the multiple rotation detector 272 stores data "01" in the multiple rotation memory 273. If it is determined that the detection pulse corresponds to the magnetic field detector 33, the multiple rotation detector 272 stores data "10" in the multiple rotation memory 273. Based on the data stored in the multiple rotation memory 273, the multiple rotation detector 272 detects the number of rotations of the shaft 213. The multiple rotation detector 272 then outputs information indicating the number of rotations of the shaft 213 to a position data generator 262.

In the case where no power-supply voltage Vcc is supplied from the outside, the rotation number detector 255 can generate consumed power by itself. Thus, no backup power supply (e.g. a battery) is required for the rotation number detector 255.

The following describes the reflective disk 242 and the light detector 232 of the rotational position detector 238. As illustrated in FIG. 3, the reflective disk 242 is fixed to a surface 11B opposite to the surface 11A to which the magnets 21, 22, 23, and 24 are fixed in the first support 11. The reflective disk 242 rotates along with the first support 11. As illustrated in FIG. 21, the reflective disk 242 is formed in a disk-shape and has an opening at the center thereof. The reflective disk 242 is arranged on the surface 11B such that the center thereof coincides with the axial line A. The reflective disk 242 is provided with a slit array 243 including a plurality of reflective slits as a reflective pattern.

As illustrated in FIG. 3, the light detector 232 is fixed to the surface facing the surface 11B of the first support 11 in the base 233 of the housing 2. As illustrated in FIG. 20, the light detector 232 includes an optical sensor 260, a one-rotation absolute value detector 261, and the position data generator 262.

The optical sensor 260 includes a light emitting unit and a light receiving unit. The optical sensor 260 irradiates the reflective disk 242 provided on the first support 11 with light output from the light emitting unit. The optical sensor 260 receives light reflected by the slit array 243 with the light receiving unit, thereby outputting a signal based on the light receiving state. The reflective slits included in the slit array 243 are arranged on the whole circumference of the reflective disk 242 so as to form an absolute pattern in the circumferential direction of the reflective disk 242. The absolute pattern uniquely determines the position and the ratio of the reflective slits within an angle at which the light receiving unit of the light detector 232 faces the reflective slits in one rotation of the reflective disk 242, for example. The optical sensor 260 irradiates the reflective disk 242 with light and receives light reflected by the reflective slits of the reflective disk 242. The optical sensor 260 then outputs a signal corresponding to the position of the reflective disk 242 in the circumferential direction.

Based on the signal output from the optical sensor 260, the one-rotation absolute value detector 261 detects the absolute position of the first support 11, that is, the rotational position of the shaft 213. The one-rotation absolute value detector 261 then outputs information indicating the rotational position of the shaft 213 to the position data generator 262.

The position data generator 262 acquires the information indicating the rotational position of the shaft 213 output from the one-rotation absolute value detector 261 and the information indicating the number of rotations of the shaft 213 output from the multiple rotation detector 272 of the rotation number detector 255. Based on the information thus acquired, the position data generator 262 calculates the rotation amount x of the motor 211. Specifically, the position data generator 262 calculates the rotation amount x of the motor 211 based on the number of rotations of the shaft 213 and the rotational position (rotational angle) of the shaft 213, for example. The position data generator 262 outputs position data indicating the rotation amount x thus calculated to the controller 220.

In the case where the power-supply voltage Vcc is supplied from the outside, the position data generator 262 may calculate the rotation amount x of the motor 211 based only on the information indicating the rotational position of the shaft 213 output from the one-rotation absolute value detector 261. By contrast, in the case where supply of the power-supply voltage Vcc from the outside is stopped and then restarted, the position data generator 262 calculates the rotation amount x of the motor 211 based on the information indicating the rotational position of the shaft 213 output from the one-rotation absolute value detector 261 and the information indicating the number of rotations of the shaft 213 output from the multiple rotation detector 272.

Alternatively, the multiple rotation detector 272 may output data stored in the multiple rotation memory 273 to the position data generator 262 without detecting the number of rotations of the shaft 213. In this case, the position data generator 262 calculates the number of rotations of the shaft 213 based on the data stored in the multiple rotation memory 273 and the rotational position of the shaft 213.

The rotation detector 1 has the configuration relating to the signal processing for detecting the rotation amount x of the motor 211 as described above. Because the rotation detector 1 detects the rotational position (one-rotation absolute value) with the optical configuration, the rotation detector 1 can detect the rotational position accurately without being affected by the leakage flux from the motor 211.

As illustrated in FIG. 2, the rotation number detector 237 is provided on one side of the first support 11, and the rotational position detector 238 is provided on the other side thereof. This makes it possible to use the first support 11 for detection of the number of rotations and detection of the rotational position, thereby achieving space-saving and downsizing of the motor unit 210. Furthermore, the first support 11 can separate the rotation number detector 237 and the rotational position detector 238. This can suppress the influence of the magnetic flux of the magnets 21, 22, 23, and 24 exerted on the light detector 232 and other circuits.

By arranging the multiple rotation memory 273 that stores therein detection results of the magnetic field detectors 31, 32, and 33 near the magnetic field detectors 31, 32, and 33, it is possible to reduce power required to transmit the detection results of the magnetic field detectors 31, 32, and 33. By arranging the power switching unit 270 near the magnetic field detectors 31, 32, and 33, it is possible to supply power from the magnetic field detectors 31, 32, and 33 efficiently.

In the rotation detector 1 according to the present embodiment, the side plate portions 41B to 46B are formed in the magnetic members 41 to 46, respectively, for example. Alternatively, a configuration including magnetic members 51 and 52 with no side plate portion may be employed like a rotation detector 50 illustrated in FIG. 22. In this case, when the magnets 21 and 22 come closer to the one end and the other end of the magnetic field detector 31, respectively, the magnetic field entering the one end surface of the magnetic field detector 31 and the magnetic field entering the other end surface of the magnetic field detector 31 are hard to be formed. As a result, when the magnets 21 and 22 come closer to the one end and the other end of the magnetic field detector 31, respectively, the magnetic flux density at the one end and the other end of the magnetic element 35 is not increased, which is nearly equal to the magnetic flux density when the magnets 21 and 22 do not come closer to the one end and the other end of the magnetic field detector 31, respectively.

To reverse the magnetization direction of the magnetic element 35 reliably and provide a stable detection pulse output at a high output level, the magnetic flux density is preferably increased throughout the magnetic element 35 when the magnets 21 and 22 come closer to the one end and the other end of the magnetic field detector 31, respectively. To achieve this, side plate portions are preferably provided on the respective magnetic members.

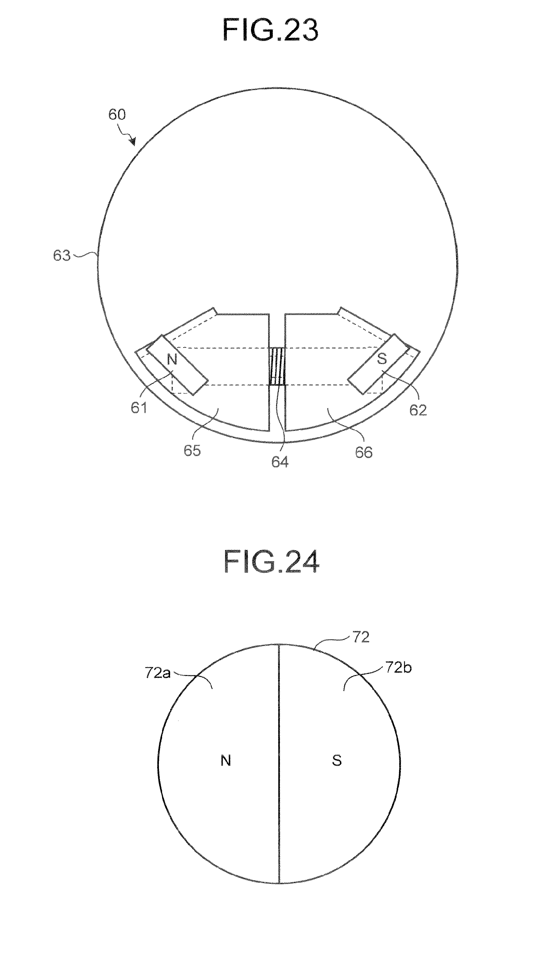

In the rotation detector 1 according to the present embodiment, the four magnets 21, 22, 23, and 24 are provided on the first support 11 at intervals of 90 degrees, and the three magnetic field detectors are provided on the second support 12 at intervals of 120 degrees. The number and the arrangement of the magnets and the number and the arrangement of the magnetic field detectors are not limited thereto. The number of magnets simply needs to be two or more, and the arrangement interval thereof is not restricted. The number of magnetic field detectors is not restricted, and the arrangement interval thereof is not restricted. The arrangement interval of the magnets and the arrangement interval of the magnetic field detectors are preferably set such that timings at which the magnetic field detectors output a detection pulse do not coincide with one another while the first support 11 is rotating as described above. FIG. 23 illustrates a rotation detector according to another embodiment. In a rotation detector 60 according to the another embodiment, two magnets 61 and 62 are provided on a first support 11, a magnetic field detector 64 is provided on a second support 63, and one end and the other end of the magnetic field detector 64 are covered with magnetic members 65 and 66, respectively.

In this case, a dimension D1 of the magnets 61 and 62 in the tangential direction may be set to an arbitrary value within a range of equal to or larger than the length according to the first embodiment to equal to or smaller than the length of a chord subtending an arc corresponding to one-half of the entire perimeter (whole circumference) of the first support 11. As illustrated in FIG. 24, a first support 72 itself may be a disk-shaped (or a ring-shaped, which is not illustrated) magnet formed of two magnetic pieces 72a and 72b divided by a central angle of 180 degrees with respect to the axial line A, for example.

While the magnetic field detectors 31, 32, and 33 are provided with a composite magnetic wire as the magnetic element 35 in the rotation detector 1 according to the present embodiment, another Barkhausen element may be used.

While iron is used as an example of the magnetic material constituting the magnetic members 41 to 46 in the rotation detector 1 according to the present embodiment, the magnetic material is not limited thereto. Another magnetic body or ferromagnetic body, such as permalloy and an electromagnetic steel sheet, may be used.

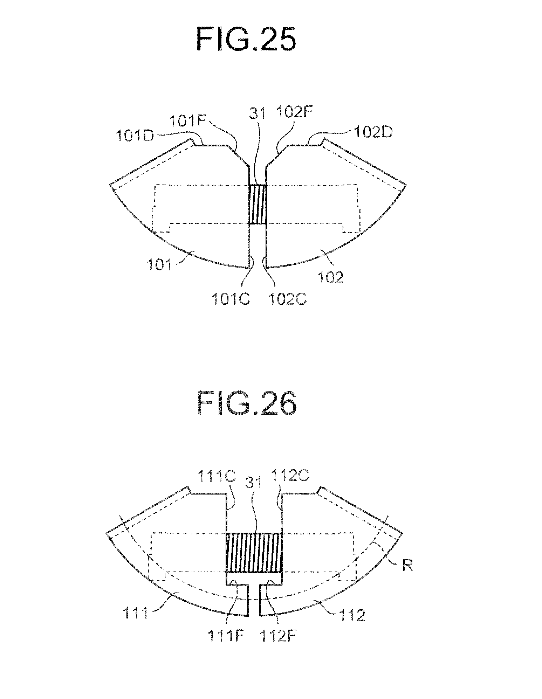

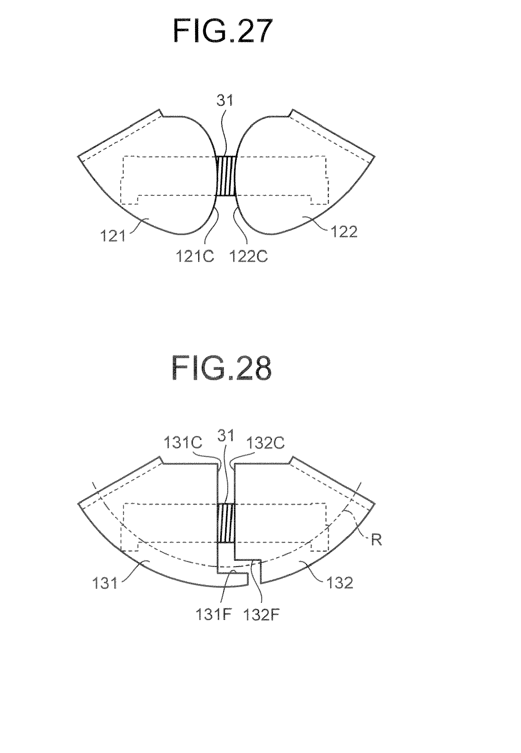

Various changes can be made on the shape of the magnetic members 41 to 46. An inclined surface 101F (102F) may be formed between a facing end surface 101C (102C) and an inner peripheral end surface 101D (102D) by cutting off a part of the corner of the facing end surface 101C (102C) and the inner peripheral end surface 101D (102D) like magnetic members 101 and 102 illustrated in FIG. 25, for example. Alternatively, the distance between a facing end surface 111C and a facing end surface 112C may be partially changed by forming recessed portions 111F and 112F in the facing end surfaces 111C and 112C, respectively, like magnetic members 111 and 112 illustrated in FIG. 26. Specifically, the gap between the facing end surface 111C and the facing end surface 112C is increased at a part corresponding to the intermediate part of the magnetic field detector 31. By contrast, the gap between the facing end surface 111C and the facing end surface 112C is decreased at a part corresponding to the area through which the magnets 21, 22, 23, and 24 pass (a part corresponding to the circumference R). Still alternatively, a facing end surface 121C and a facing end surface 122C each may be formed in an arc shape such that the facing end surface 121C and the facing end surface 122C are the closest to each other at a part corresponding to the intermediate part of the magnetic field detector 31 like magnetic members 121 and 122 illustrated in FIG. 27. Still alternatively, crank portions 131F and 132F bent in a crank shape may be formed at a part corresponding to the area through which the magnets 21, 22, 23, and 24 pass (a part corresponding to the circumference R) in a facing end surface 131C and a facing end surface 132C like magnetic members 131 and 132 illustrated in FIG. 28.

The rotation detector 1 according to the present embodiment rotates the first support 11 and the magnets 21, 22, 23, and 24 provided thereto, for example. Alternatively, the second support 12 and the magnetic field detectors 31, 32, and 33 provided thereto may be rotated.

### First Modification

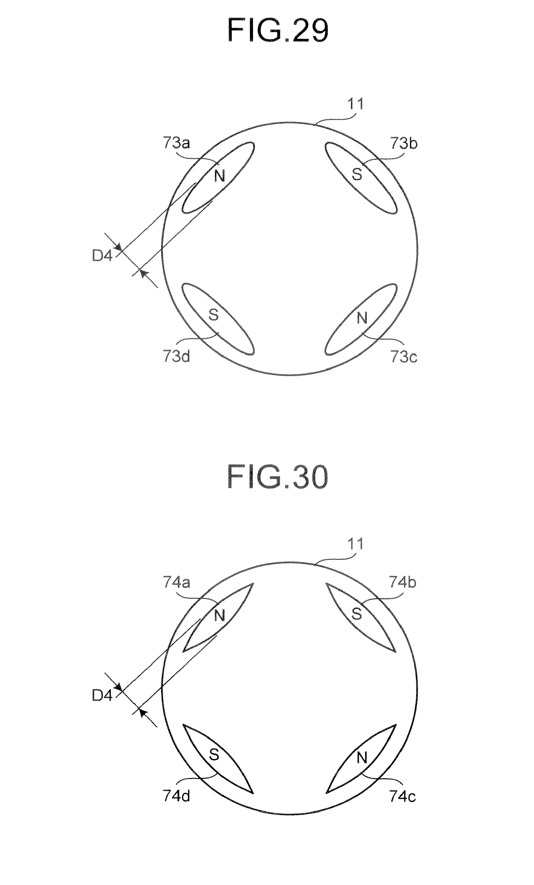

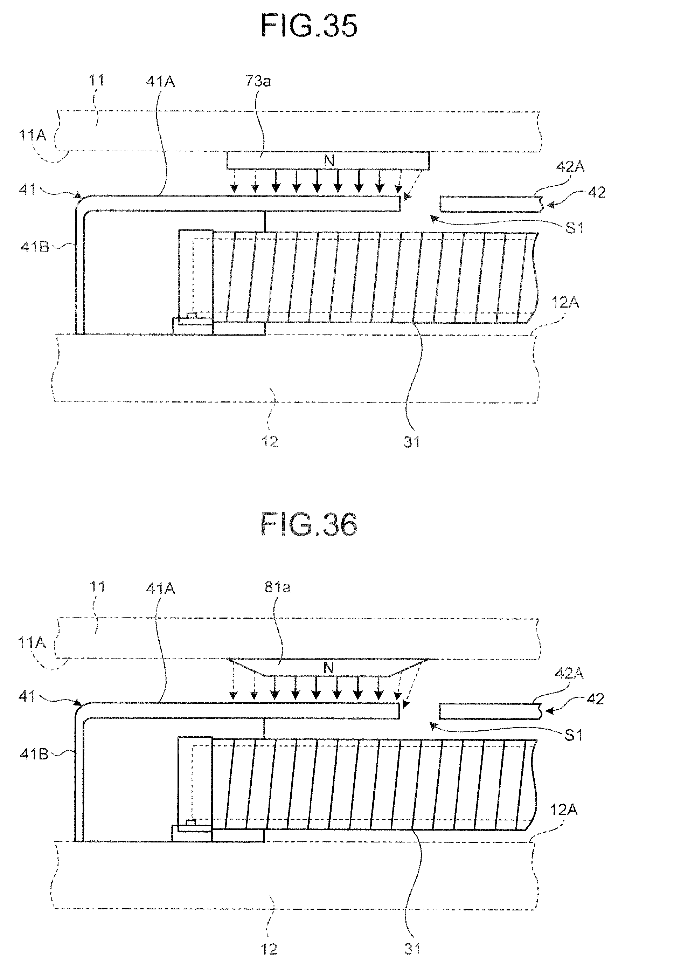

The following describes a first modification of the rotation detector 1 included in the motor unit 210 according to the present embodiment with reference to FIG. 29 to FIG. 35. FIG. 29 to FIG. 34 each illustrate an example of the planar shape of the magnets in the rotation detector 1 of the motor unit 210 according to the first modification of the present embodiment. FIG. 35 illustrates a state where the other end of a magnet starts to face the gap S1 in the rotation detector 1 of the motor unit 210 according to the first modification of the present embodiment. The same components as those of the rotation detector 1 according to the present embodiment are represented by the same reference numerals, and explanations thereof will be omitted.

In the first modification of the present embodiment, the dimension of each magnet in the radial direction is smaller at the one end and the other end (hereinafter, referred to as "both ends") in the tangential direction of the circumference R than at the center thereof on a surface facing the second support 12 (hereinafter, referred to as a "plane"). Various changes can be made on the planar shape of the magnets.

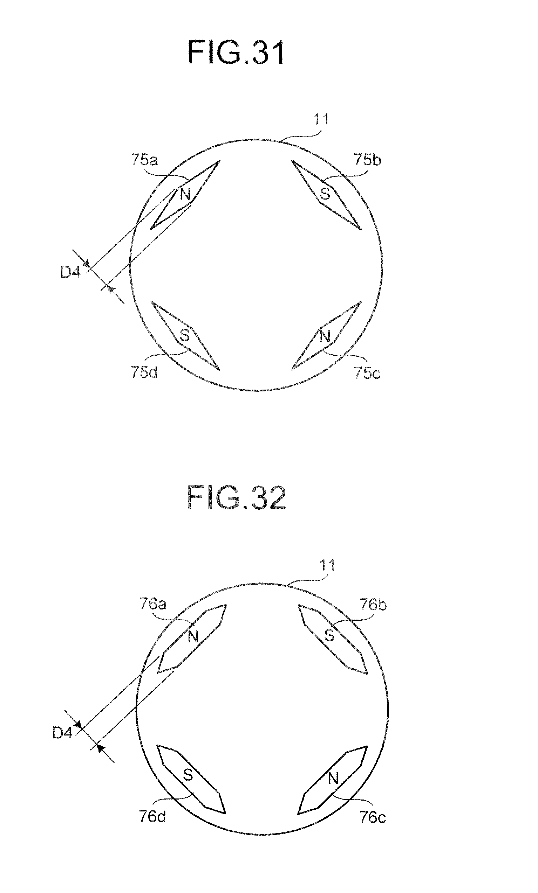

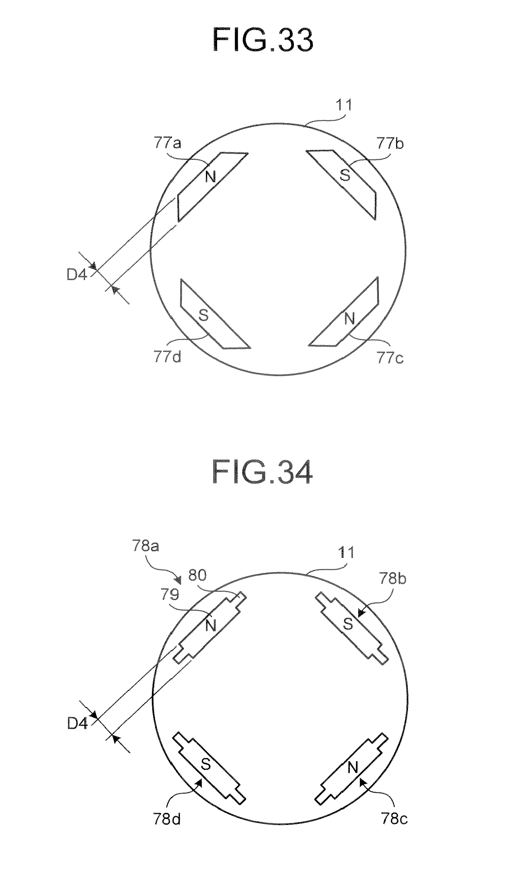

As illustrated in FIG. 29, the planar shape of magnets 73a, 73b, 73c, and 73d may be an elliptical shape having the major axis along the tangential direction, for example. As illustrated in FIG. 30, the planar shape of magnets 74a, 74b, 74c, and 74d may be an approximately elliptical shape forming an acute angle at both ends in the tangential direction. As illustrated in FIG. 31, the planar shape of magnets 75a, 75b, 75c, and 75d may be a rhombic shape that is long in the tangential direction. As illustrated in FIG. 32, the planar shape of magnets 76a, 76b, 76c, and 76d may be a hexagonal shape that is long in the tangential direction and forms an acute angle at both ends. As illustrated in FIG. 33, the planar shape of magnets 77a, 77b, 77c, and 77d may be a trapezoidal shape that is long in the tangential direction and forms an acute angle at both ends. As illustrated in FIG. 34, the planar shape of magnets 78a, 78b, 78c, and 78d may be formed of a main portion 79 and narrow-width portions 80, for example. The main portion 79 has a rectangular shape that is long in the tangential direction. The narrow-width portions 80 are smaller than the main portion 79 in the radial direction and protrude from both end surfaces of the main portion 79 in the tangential direction.

In the rotation detector 1 included in the motor unit 210 according to the first modification of the present embodiment, the magnets 73a to 78a, 73b to 78b, 73c to 78c, and 73d to 78d are each formed such that the areas at both ends in the tangential direction of the circumference R are smaller than the area at the center in the tangential direction of the circumference R on the surface facing the second support 12 (or viewed from the second support 12 side). Because the strength of magnetic force is proportional to the area, the magnetic force is reduced at both ends in the magnets 73a to 78a, 73b to 78b, 73c to 78c, and 73d to 78d. An assumption is made that the first support 11 further rotates in the direction from the one end to the other end of the magnetic field detector 31 and that the other end of the magnet 73a starts to face the gap S1 between the magnetic member 41 and the magnetic member 42 as illustrated in FIG. 35, for example. At this time, it is possible to reduce the magnetic flux density at the other end of the magnet 73a extending to the magnetic member 41 positioned on the downstream in the direction opposite to the direction of rotation of the first support 11. FIG. 35 illustrates the state where the magnetic flux density at both ends of the magnet 73a is lower than the magnetic flux density at the center of the magnet 73a with dashed arrows. Thus, it is possible to suppress cogging torque effectively.

The same applies to the action for reducing cogging torque of the other magnets on the other magnetic members 43, 44, 45, and 46.

### Second Modification

The following describes a second modification of the rotation detector 1 included in the motor unit 210 according to the present embodiment with reference to FIG. 36. FIG. 36 illustrates a state where the other end of a magnet starts to face the gap S1 in the rotation detector 1 of the motor unit 210 according to the second modification of the present embodiment. The same components as those of the rotation detector 1 according to the present embodiment are represented by the same reference numerals, and explanations thereof will be omitted.

In the rotation detector 1 according to the second modification of the present embodiment, four magnets 81a, 81b, 81c, and 81d are arranged on the first support 11 in the same manner as in the present embodiment. Because the shapes of the magnets 81a, 81b, 81c, and 81d are the same, a specific explanation will be made of the magnet 81a. As illustrated in FIG. 36, the magnet 81a is formed such that the clearance between the magnet 81a and the second support 12 is larger at both ends in the tangential direction of the circumference R than at the center thereof. Specifically, the magnet 81a is formed in a trapezoidal shape sloping from the side facing the second support 12 toward the first support 11 (sloping upward to the one end side and the other end side), for example.

Because the strength of magnetic force is inversely proportional to the square of the distance, the magnetic force is reduced at both ends in the magnets 81a, 81b, 81c, and 81d in the rotation detector 1 included in the motor unit 210 according to the second modification of the present embodiment. An assumption is made that the first support 11 further rotates in the direction from the one end to the other end of the magnetic field detector 31 and that the other end of the magnet 81a starts to face the gap S1 between the magnetic member 41 and the magnetic member 42 as illustrated in FIG. 36, for example. At this time, it is possible to reduce the magnetic flux density at the other end of the magnet 81a extending to the magnetic member 41 positioned on the downstream in the direction opposite to the direction of rotation of the first support 11. FIG. 36 illustrates the state where the magnetic flux density at both ends of the magnet 81a is lower than the magnetic flux density at the center thereof with dashed arrows. Thus, it is possible to suppress cogging torque effectively.

The same applies to the action for reducing cogging torque of the other magnets 81b, 81c, and 81d on the other magnetic members 43, 44, 45, and 46. The structure of the second modification of the present embodiment may be applied to the first modification.

While sintered magnets are used as the magnets 21, 22, 23, and 24 and other magnets according to the embodiments and the modifications, bonded magnets produced by kneading crushed magnets (magnet powder) into a rubber or a plastic may be used. In this case, the magnet powder density may be increased at the center of the bonded magnet in the tangential direction of the circumference R and decreased at both ends in the tangential direction. In other words, the bonded magnets have lower magnetic force at both ends in the tangential direction of the circumference R than at the center thereof. This can maintain the homogenized state of the distribution of the magnetic flux density in the circumferential direction, thereby suppressing cogging torque effectively.

As described above, a motor unit according to the embodiments includes a motor that rotates a shaft about an axial line and a rotation detector that detects rotation of the shaft. If rotation of at least one of a first support and a second support (hereinafter, simply referred to as "rotation of a support") causes the whole of a magnetic field forming unit to face a first magnetic member in the rotation detector, for example, almost all the magnetic flux formed by the magnetic field forming unit extends to the first magnetic member facing the magnetic field forming unit. This is a magnetically stable state, and torque applied to the rotation of the support remains constant.

If the support further rotates in a direction from one end to the other end of a magnetic field detector and the other end of the magnetic field forming unit starts to face a gap between the first magnetic member and a second magnetic member, magnetic flux at the other end among magnetic flux formed by the magnetic field forming unit extends to the first magnetic member positioned on the downstream in a direction opposite to the direction of rotation of the support. The magnetic flux at the other end usually acts as force (cogging torque) to reverse the support in a direction opposite to the direction of rotation. Because the magnetic field forming unit is long in the tangential direction of the circumference in the rotation detector, the portion (the other end) that generates the cogging torque is significantly small in the magnetic field forming unit, and a large part of the magnetic field forming unit faces the first magnetic member in relative terms. In other words, the distribution of magnetic flux density of the magnetic field forming unit is homogenized in the circumferential direction. This can maintain the magnetically stable state, thereby reducing the cogging torque relatively.

Each magnetic field forming unit is longer than the gap between two magnetic members in the rotation detector. If the support further rotates, the magnetic field forming unit faces the gap between the first magnetic member and the second magnetic member in a manner covering the gap. In this state, the magnetic flux formed by the magnetic field forming unit is diffused substantially homogenously to the first magnetic member and the second magnetic member. This can keep the torque applied to the rotation of the support constant.

If the support further rotates and one end of the magnetic field forming unit facing the gap between the two magnetic members starts to come closer to one end of the second magnetic member, magnetic flux formed by the one end of the magnetic field forming unit extends to the second magnetic member positioned on the downstream in the direction of rotation of the support. The magnetic flux at the one end usually acts as force to forward the support in the direction of rotation. Because the magnetic field forming unit is long in the tangential direction of the circumference as described above, the portion (the one end) that generates the force to forward the support in the direction of rotation is significantly small in the magnetic field forming unit, and a large part of the magnetic field forming unit faces the second magnetic member in relative terms. As a result, the distribution of the magnetic flux density of the magnetic field forming unit is homogenized in the circumferential direction. This can reduce torque fluctuations in the rotation of the support.

The motor unit according to the embodiment can reduce torque fluctuations in the rotation of the support. The motor unit can suppress cogging, thereby detecting rotation of the shaft accurately.

At least a pair of magnetic field forming units is arranged in a manner facing an overlapping point serving as an intersection point at which one end and the other end of a magnetic element in the longitudinal direction overlap with the circumference. The dimension of the magnetic field forming units in the tangential direction of the circumference is equal to or larger than a length twice as long as a distance from the center of the magnetic field forming units in the tangential direction of the circumference to a position corresponding to one end of the first magnetic member in the circumferential direction when the center of the magnetic field forming units coincides with the overlapping point at one end of the magnetic field detector in the longitudinal direction and equal to or smaller than the length of a chord subtending an arc corresponding to one-half of the whole circumference of the first support.

In the case where a first magnetic field forming unit of the N-pole and a second magnetic field forming unit of the S-pole are arranged on the first support in the rotation detector, for example, rotation of the support leads to the following condition: the first magnetic field forming unit comes closer to the overlapping point at the one end of the magnetic field detector with the first magnetic member interposed therebetween; and the second magnetic field forming unit comes closer to the overlapping point at the other end of the magnetic field detector with the second magnetic member interposed therebetween in relative terms. At this time, a large part of the magnetic flux formed by the pair of magnetic field forming units enters the first magnetic member from the first magnetic field forming unit and travels toward the other end. The magnetic flux then enters an intermediate part of the magnetic field detector through the gap between the first magnetic member and the second magnetic member. The magnetic flux entering the magnetic field detector travels toward the other end. The magnetic flux then leaves the magnetic field detector near the second magnetic member and enters the second magnetic member. The magnetic flux entering the second magnetic member travels toward the second magnetic field forming unit and reaches the second magnetic field forming unit from the second magnetic member. Thus, the magnetic field extending from the first magnetic field forming unit to the second magnetic field forming unit is induced.

In the rotation detector, the magnetic field forming units are arranged in a manner facing respective overlapping points. In addition, the dimension of the magnetic field forming units in the tangential direction of the circumference is equal to or larger than a length twice as long as the distance from the center of the magnetic field forming units to the position corresponding to the one end of the first magnetic member when the center of the magnetic field forming units coincides with the overlapping point at the one end of the magnetic field detector and equal to or smaller than the length of a chord subtending an arc corresponding to one-half of the first support. With the magnetic field forming units arranged in this manner and having the length described above, it is possible to suppress cogging and to supply energy (magnetic flux density) required to magnetize the magnetic element of the magnetic field detector in a predetermined direction to the magnetic element. This can prevent a hard-to-predict change in the magnetization direction of the magnetic element, thereby increasing the detection accuracy of rotation of the shaft.

The magnetic field forming units are each formed such that the dimension thereof in the radial direction is smaller at both ends in the tangential direction of the circumference than at the center thereof. In other words, the magnetic field forming units are each formed such that the areas at both ends in the tangential direction of the circumference are smaller than the area at the center thereof viewed from the second support side. Because the strength of magnetic force is proportional to the area, the magnetic force is reduced at both ends in the magnetic field forming units. When the support further rotates in the direction from the one end to the other end of the magnetic field detector and the other end of the magnetic field forming unit starts to face the gap between the first magnetic member and the second magnetic member, for example, it is possible to reduce the magnetic flux density at the other end of the magnetic field forming unit extending to the first magnetic member positioned on the downstream in the direction opposite to the direction of rotation of the support. This can reduce cogging torque effectively.

The magnetic field forming units are each formed such that the clearance between the magnetic field forming unit and the second support is larger at both ends in the tangential direction of the circumference than at the center thereof. Because the strength of magnetic force is inversely proportional to the square of the distance, the magnetic force is reduced at both ends in the magnetic field forming units. When the support further rotates in the direction from the one end to the other end of the magnetic field detector and the other end of the magnetic field forming unit starts to face the gap between the first magnetic member and the second magnetic member, for example, it is possible to reduce the magnetic flux density at the other end of the magnetic field forming unit extending to the first magnetic member positioned on the downstream in the direction opposite to the direction of rotation of the support. This can reduce cogging torque effectively.

The magnetic field forming units are bonded magnets and each formed so as to have lower magnetic force at both ends in the tangential direction of the circumference than at the center thereof. When the support further rotates in the direction from the one end to the other end of the magnetic field detector and the other end of the magnetic field forming unit starts to face the gap between the first magnetic member and the second magnetic member, for example, it is possible to reduce the magnetic flux density at the other end of the magnetic field forming unit extending to the first magnetic member positioned on the downstream in the direction opposite to the direction of rotation of the support. This can reduce cogging torque effectively.

The first support is provided with at least two pairs of magnetic field forming units arranged in a manner surrounding the whole circumference of the axial line at regular intervals such that the polarities thereof alternate in the circumferential direction. The second support is provided with at least three magnetic field detectors arranged in a manner surrounding the whole circumference of the axial line at regular intervals in the circumferential direction. The magnetic field detectors are each provided with the first magnetic member and the second magnetic member. Pairs of the first magnetic member and the second magnetic member arranged adjacent to each other in the circumferential direction among a plurality of first magnetic members and a plurality of second magnetic members are positioned close to each other. This forms a continuous arrangement of the first magnetic members and the second magnetic members. The continuous arrangement covers the outer circumferential side of a portion of the second support facing the first support over nearly the whole circumference with the magnetic field detectors interposed between the continuous arrangement and the second support.

The continuous arrangement of the first magnetic members and the second magnetic members covers the outer circumferential side of the portion of the second support facing the first support over nearly the whole circumference, thereby suppressing magnetic force generated between the magnetic field forming units and the magnetic field detectors and homogenizing the magnetic force in the circumferential direction. This can suppress cogging occurring in association with rotation of the support.

The rotation detector according to the embodiment includes a storage unit that stores therein a detection result of the magnetic field detectors and a rotation number detector that detects the number of rotations of the shaft based on information stored in the storage unit. The storage unit is arranged near the magnetic field detectors. This makes it possible to reduce power required to transmit and store the detection result of the magnetic field detectors in the storage unit.

The rotation detector according to the embodiment includes an optical rotational position detection sensor that detects a rotational position of the shaft. The rotational position detection sensor includes a reflective pattern formed on the first support or the second support that rotates along with the shaft and an optical sensor that irradiates the reflective pattern with light and receives light reflected by the reflective pattern.

The rotation detector according to the embodiment detects the rotational position of the shaft with the optical positional detection sensor. Thus, the rotation detector can detect the rotational position of the shaft accurately without being affected by leakage flux from the motor.

The reflective pattern is formed on a surface of the first support opposite to the surface on which the magnetic field forming units are arranged or a surface of the second support opposite to the surface on which the magnetic field detectors are arranged.

By forming the reflective pattern on the first support, both the magnetic field forming units and the reflective pattern can be provided on the first support. This enables the first support to be used as a member shared by the magnetic field forming units and the reflective pattern. By forming the reflective pattern on the second support, both the magnetic field detectors and the reflective pattern can be provided on the second support. This enables the second support to be used as a member shared by the magnetic field detectors and the reflective pattern. These configurations can reduce the size of the rotation detector, thereby downsizing the motor unit.

Forming the reflective pattern on the first support enables the magnetic field forming units and the rotational position detection sensor to be separated from each other by the first support. Forming the reflective pattern on the second support enables the magnetic field detectors and the rotational position detection sensor to be separated from each other by the second support. By separating the rotational position detection sensor from the magnetic field forming units or the magnetic field detectors in this manner, it is possible to suppress an influence of the magnetic field formed by the magnetic forming units exerted on the rotational position detection sensor.

The first support is arranged at a position closer to the motor than the second support and rotates along with rotation of the shaft. The reflective pattern is formed on a surface of the first support facing the motor. As a result, the motor, the rotational position detection sensor, the first support, the magnetic field forming units, the magnetic field detectors, and the second support are arranged in this order. In this arrangement, the rotational position detection sensor is interposed between a magnetic configuration including the magnetic field forming units and the magnetic field detectors and the motor, thereby separating the magnetic configuration and the motor. Thus, it is possible to suppress an influence of the leakage flux from the motor exerted on the magnetic configuration.

## Claims

1. A motor unit (210) comprising:
a motor (211) configured to rotate a shaft (213) about an axial line (A); and
a rotation detector (1) configured to detect rotation of the shaft (213), wherein
the rotation detector (1) comprises:
a first support and a second support (11, 12) that are provided in a manner separated from each other in a direction of the axial line (A), one of which is rotated along with rotation of the shaft (213) using the axial line (A) as a rotational axis;
a pair of magnetic field forming units (21, 22, 23, 24) that is provided on the first support (11) in a manner facing the second support (12) at different positions along a circumference (R) about the axial line (A) and having different polarities;
at least one magnetic field detector (31, 32, 33) that is formed by winding a coil (36) around a magnetic element (35) whose magnetized direction changes in a longitudinal direction and provided on the second support (12) such that a longitudinal-direction side of the magnetic element (35) faces the first support (11); and
a first magnetic member and a second magnetic member (41, 42, 43, 44, 45, 46) that are each made of a magnetic material, that cover longitudinal-direction both ends of the magnetic field detector (31, 32, 33) facing the first support (11), respectively, and that face each other with a gap (S1) interposed therebetween at a longitudinal-direction mid-portion of the magnetic field detector (31, 32, 33), and
a dimension (D1) of each of the magnetic field forming units (21, 22, 23, 24) in a tangential direction of the circumference (R) is larger than a dimension (D4) of the corresponding magnetic field forming unit (21, 22, 23, 24) in a radial direction and is larger than the distance of the gap (S1).

2. The motor unit (210) according to claim 1, wherein the pair of magnetic field forming units (21, 22, 23, 24) is arranged in a manner facing an overlapping point (P1) serving as an intersection point at which longitudinal-direction both ends of the magnetic element (35) overlap with the circumference (R), and
the dimension of each of the magnetic field forming units (21, 22, 23, 24) in the tangential direction of the circumference (R) is equal to or larger than a length twice as long as a distance from center of the corresponding magnetic field forming unit (21, 22, 23, 24) in the tangential direction of the circumference (R) to a position corresponding to one end of the first magnetic member (41, 43, 45) in a circumferential direction when the center of the corresponding magnetic field forming unit (21, 22, 23 ,24) coincides with the overlapping point (P1) at one end of the magnetic field detector (31, 32, 33) in the longitudinal direction and equal to or smaller than the length of a chord subtending an arc corresponding to one-half of the whole circumference of the first support (11).

3. The motor unit (210) according to claim 1 or 2, wherein each of the magnetic field forming units (21, 22, 23, 24) is formed such that the dimension thereof in the radial direction is smaller at both ends in the tangential direction of the circumference (R) than at the center thereof.

4. The motor unit (210) according to any one of claims 1 to 3, wherein each of the magnetic field forming units (21, 22, 23, 24) is formed such that a clearance between the corresponding magnetic field forming unit (21, 22, 23, 24) and the second support is larger at both ends in the tangential direction of the circumference (R) than at the center thereof.

5. The motor unit (210) according to any one of claims 1 to 4, wherein each of the magnetic field forming units (21, 22, 23, 24) is bonded magnets and formed so as to have lower magnetic force at both ends in the tangential direction of the circumference than at the center thereof.

6. The motor unit (210) according to any one of claims 1 to 5, wherein
the first support (11) is provided with at least two pairs of the magnetic field forming units (21, 22, 23, 24) arranged in a manner surrounding the whole circumference of the axial line (A) at regular intervals such that the polarities thereof alternate in the circumferential direction,
the second support (12) is provided with at least three of the magnetic field detectors (31, 32, 33) arranged in a manner surrounding the whole circumference of the axial line (A) at regular intervals in the circumferential direction,
each of the magnetic field detectors (31, 32, 33) is provided with the first magnetic member (41, 43, 45) and the second magnetic member (42, 44, 46),
each of pairs of the first magnetic members (41, 43, 45) and of the respective second magnetic members (42, 44, 46) arranged adjacent to each other in the circumferential direction among first magnetic members (41, 43, 45) and second magnetic members (42, 44, 46) are positioned close to each other, forming a continuous arrangement of the first magnetic members (41, 43, 45) and the second magnetic members (42, 44, 46), and the continuous arrangement covers an outer circumferential side of a portion of the second support (12) facing the first support (11) over nearly the whole circumference with the magnetic field detector (31, 32, 33) interposed between the continuous arrangement and the second support (12).

7. The motor unit (210) according to any one of claims 1 to 6, further comprising:
a storage unit (273) configured to store therein a detection result of the magnetic field detector (31, 32, 33); and
a rotation number detector (272) configured to detect number of rotations of the shaft based on information stored in the storage unit, wherein
the storage unit (273) is arranged near the magnetic field detector (31, 32, 33).

8. The motor unit (210) according to any one of claims 1 to 7, further comprising:
a rotational position detection sensor (238) configured to optically detect a rotational position of the shaft (213), wherein
the rotational position detection sensor (238) comprises:
a reflective pattern (243) formed on the first support (11) or the second support (12) that rotates along with the shaft (213); and
an optical sensor (260) that irradiates the reflective pattern (243) with light and receives light reflected by the reflective pattern (243).

9. The motor unit (210) according to claim 8, wherein the reflective pattern (243) is formed on a surface of the first support (11) opposite to a surface on which the pair of magnetic field forming units (21, 22, 23, 24) is arranged or a surface of the second support (12) opposite to a surface on which the magnetic field detector (31, 32, 33) is arranged.

10. The motor unit (210) according to claim 8 or 9, wherein
the first support (11) is arranged at a position closer to the motor (211) than the second support (12) and rotates along with rotation of the shaft (213), and
the reflective pattern (243) is formed on a surface of the first support (11) facing the motor (211).
